# EUROPEAN PATENT SPECIFICATION

(11) **EP 4 500 032 B1**
(45) Date of publication and mention of the grant of the patent: **06.05.2026**
(21) Application number: 23712497.9
(22) Date of filing: 16.03.2023
(51) Int. Cl.: F16B 7/18, F16B 7/04, B65G 1/04, B65G 1/137, F16B 12/44

(54) **INVENTORY HANDLING STATION ASSEMBLY**
INVENTARHANDHABUNGSSTATIONSANORDNUNG
ENSEMBLE STATION DE MANIPULATION D'INVENTAIRE

(30) Priority: 25.03.2022 GB 202204280
(43) Date of publication of application: 05.02.2025
(73) Proprietor: Ocado Innovation Limited, Hatfield, Hertfordshire AL10 9UL (GB)
(72) Inventor: HABBEN, Keith, HATFIELD Hertfordshire AL10 9UL (GB); BOHAN, Stephen, Hatfield Hertfordshire AL10 9UL (GB); SKEEN-SMITH, Larry, Hatfield Hertfordshire AL10 9UL (GB)
(74) Representative: Ocado Group IP Department
(86) International application number: PCT/EP2023/056738
(87) International publication number: WO 2023/180164

(56) References cited:
- WO-A1-2021/239559
- KR-A- 20130 103 029
- KR-A- 20220 027 459
- US-A- 3 890 022
- US-A1- 2019 330 838
- US-A1- 2021 032 026

## Description

### Field of Invention

The present invention relates to the field of a storage and retrieval system for handling storage containers or bins stacked in a grid framework structure, more particularly to an inventory handling station assembly for picking or supplying one or more items or goods to or from the storage and retrieval system comprising the grid framework structure.

### Background

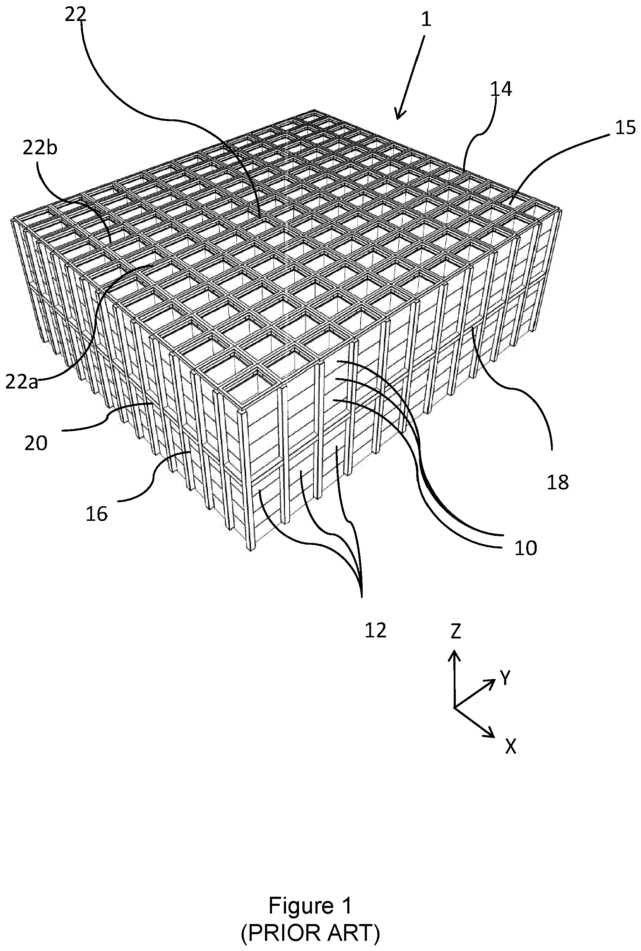

Storage systems comprising a three-dimensional storage grid structure, within which storage containers/bins are stacked on top of each other, are well known. PCT Publication No. WO2021/175872A (Ocado) describes a known storage and fulfilment system in which stacks of bins or containers are arranged within a grid framework structure. The bins or containers are accessed by load handling devices remotely operative on tracks located on the top of the grid framework structure. A system of this type is illustrated schematically in Figures 1 to 3 of the accompanying drawings.

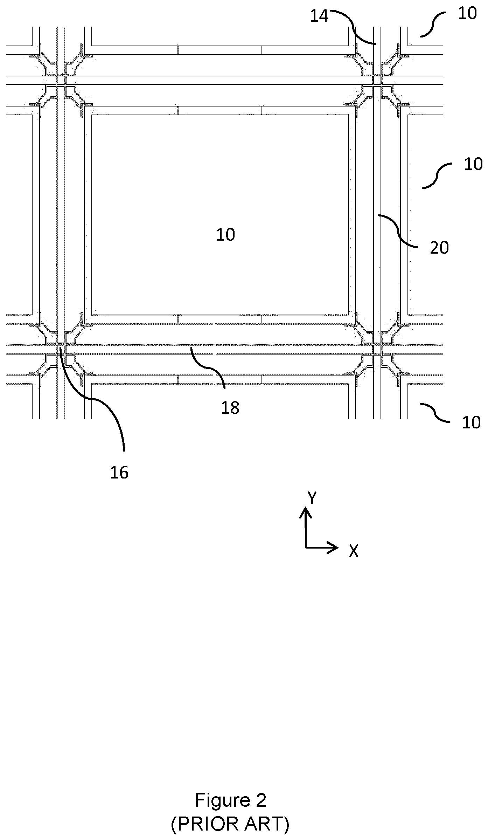

As shown in Figures 1 and 2, stackable containers, known as bins or containers 10, are stacked on top of one another to form stacks 12. The stacks 12 are arranged in a grid framework structure 14 in a warehousing or manufacturing environment. The grid framework is made up of a plurality of storage columns or grid columns 15. Each grid in the grid framework structure has at least one grid column for storage of a stack of containers. Figure 1 is a schematic perspective view of the grid framework structure 14, and Figure 2 is a top-down view showing a stack 12 of bins 10 arranged within the framework structure 14. Each bin 10 typically holds a plurality of product items (not shown), and the product items within a bin 10 may be identical, or may be of different product types depending on the application.

The grid framework structure 14 comprises a plurality of upright members or upright columns 16 that support horizontal members 18, 20. A first set of parallel horizontal grid members 18 is arranged perpendicularly to a second set of parallel horizontal grid members 20 to form a plurality of horizontal grid structures supported by the upright members 16. The members 16, 18, 20 are typically manufactured from metal and typically welded or bolted together or a combination of both. The bins 10 are stacked between the members 16, 18, 20 of the grid framework structure 14, so that the grid framework structure 14 guards against horizontal movement of the stacks 12 of bins 10, and guides vertical movement of the bins 10.

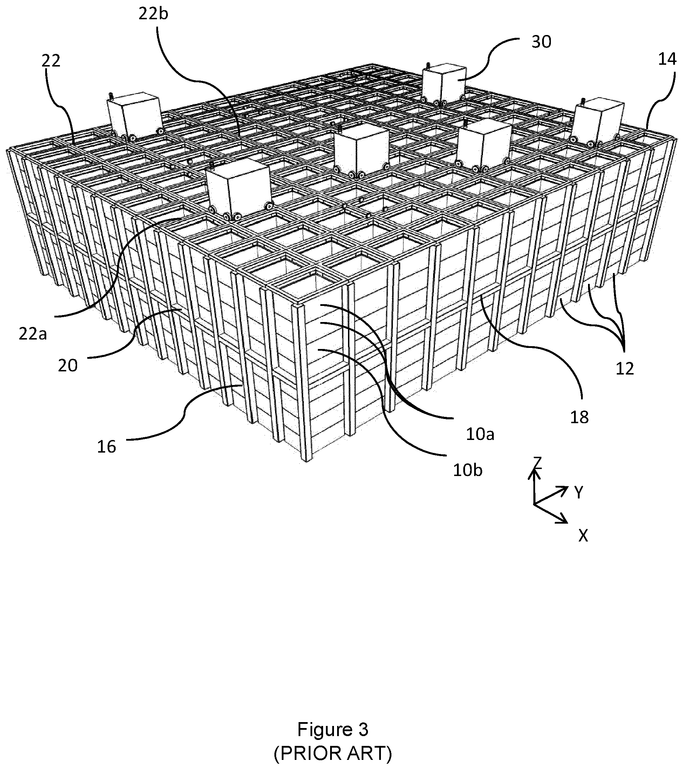

The top level of the grid framework structure 14 includes rails 22 arranged in a grid pattern across the top of the stacks 12. Referring additionally to Figure 3, the rails 22 support a plurality of load handling devices 30. A first set 22a of parallel rails 22 guides movement of the robotic load handling devices 30 in a first direction (for example, an X-direction) across the top of the grid framework structure 14, and a second set 22b of parallel rails 22, arranged perpendicular to the first set 22a, guides movement of the load handling devices 30 in a second direction (for example, a Y-direction), perpendicular to the first direction. In this way, the rails 22 allow movement of the robotic load handling devices 30 laterally in two dimensions in the horizontal X-Y plane, so that a load handling device 30 can be moved into position above any of the stacks 12.

A known load handling device 30 shown in Figure 4 and 5 comprises a vehicle body 32 is described in PCT Patent Publication No. WO2015/019055 (Ocado), where each load handling device 30 only covers one grid space of the grid framework structure 14. Here, the load handling device 30 comprises a wheel assembly comprising a first set of wheels 34 consisting a pair of wheels on the front of the vehicle body 32 and a pair of wheels 34 on the back of the vehicle body 32 for engaging with the first set of rails or tracks to guide movement of the device in a first direction and a second set of wheels 36 consisting of a pair of wheels 36 on each side of the vehicle 32 for engaging with the second set of rails or tracks to guide movement of the device in a second direction. Each set of wheels is driven to enable movement of the vehicle in X and Y directions respectively along the rails. One or both sets of wheels can be moved vertically to lift each set of wheels clear of the respective rails, thereby allowing the vehicle to move in the desired direction.

The load handling device 30 is equipped with a lifting device or crane mechanism to lift a storage container from above. The crane mechanism comprises a winch, a tether or cable 38 wound on a spool or reel (not shown) and a grabber device 39. The lifting device or crane mechanism comprises a set of lifting tethers 38 extending in a vertical direction and connected nearby or at the four corners of a lifting frame 39, otherwise known as a grabber device (one tether near each of the four corners of the grabber device) for releasable connection to a storage container 10. The grabber device 39 is configured to releasably grip the top of a storage container 10 to lift it from a stack of containers in a storage system of the type shown in Figures 1 and 2.

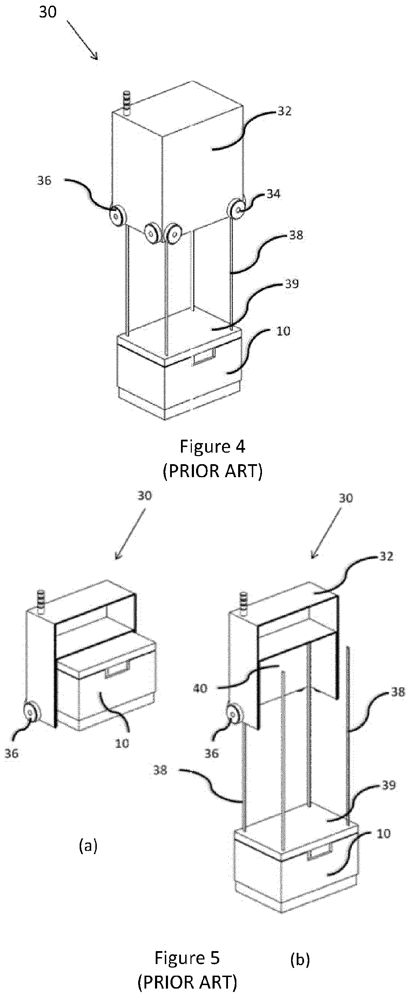

The wheels 34, 36 are arranged around the periphery of a cavity or recess, known as a container-receiving recess 40, in the lower part of the load handling device. The recess is sized to accommodate the container 10 when it is lifted by the crane mechanism, as shown in Figure 5 (a and b). When in the recess, the container is lifted clear of the rails beneath, so that the vehicle or load handling device can move laterally to a different location. On reaching the target location, for example another stack, an access point in the storage system or a conveyor belt, the bin or container can be lowered from the container receiving portion and released from the grabber device.

Thus, upon receipt of a customer order, a load handling device operative to move on the tracks is instructed to pick up a storage bin containing the item of the order from a stack in the grid framework structure and transport the storage bin to an inventory handling station whereupon the item can be retrieved from the storage bin. Where the inventory handling station is used to pick one or more items such an inventory handling station is known as a pick station. Typically, the load handling device transports the storage bin or container to a bin lift device that is integrated into the grid framework structure. A mechanism of the bin lift device lowers the storage bin or container to the pick station. At the pick station, the item is retrieved from the storage bin. Picking can done manually by hand or by a robot as taught in GB2524383 (Ocado Innovation Limited). After retrieval from the storage bin, the storage bin is transported to a second bin lift device whereupon it is lifted to grid level to be retrieved by a load handling device and transported back into its location within the grid framework structure. A control system and a communication system keeps track of the location of the storage bins and their contents within the grid framework structure. As individual containers are stacked in vertical layers, their locations in the grid framework structure or "hive" may be indicated using co-ordinates in three dimensions to represent the load handling device or a container's position and a container depth (e.g. container at (X, Y, Z), depth W). Equally, locations in the grid framework structure may be indicated in two dimensions to represent the load handling device or a container's position and a container depth (e.g. container depth (e.g. container at (X, Y), depth Z). For example, Z=1 identifies the uppermost layer of the grid, i.e. the layer immediately below the rail system, Z=2 is the second layer below the rail system and so on to the lowermost, bottom layer of the grid.

Equally when stocking the storage system with items or replenishing the inventory of the storage system, items delivered from a supplier are transported to the inventory handling station. Since items are supplied or decanted to replenish stock in the storage system, the inventory handling station is known as a decant station or a supply station. Here, the items are removed from their packaging and depending on the type of item, registered with a unique stock keeping unit or SKU, and placed in storage bins at the decant station. At the decant station, the storage bins are transported to a bin lift device whereupon it is lifted to grid level to be retrieved by a load handling device and transported to a location within the grid framework structure.

WO2017/211640 (Autostore Technology AS) describes a storage system for storing product items, comprising a grid structure, a number of storage bins configured to be stored in vertical compartments in the grid structure, where each storage bin is configured to contain at least one product item, wherein the storage system comprises a picking and/or supply station; and where the storage system comprises a conveyor system configured to convey a storage bin from a first position to a second position and further to a third position. The conveyor system comprises a first, tiltable conveyor configured to convey the storage bin from the first position to the third position via the second position. The picking and/or supply station is provided adjacent to the grid structure. The first and third positions are provided below two different vertical compartments in the grid structure. The tiltable conveyor comprises a hydraulic piston and cylinder mechanism for lowering and elevating a conveyor. The tiltable conveyor supports a storage bin in an inclined position in the second position so allowing items to be manually picked from the storage bin. Once picked, the tiltable conveyor is tilted down and the storage bin is transported to a third position allowing for the storage bin to be retrieved by a load handling device operative on the grid structure.

WO2018/069282 (Autostore Technology AS) describes a picking/supply station assembly for a storage system comprising a grid structure. The picking/supply station assembly comprises a first bin lift device, a second bin lift device and a picking/supply station, wherein the first bin lift device is arrangeable to receive a storage bin from the at least one vehicle at the top level of the grid structure and deliver the storage bin to the picking/supply station. The picking/supply station comprises a bin transport assembly arranged to move the storage bin from the first bin lift device to the second bin lift device; and the second bin lift device is arranged to receive the storage bin from the bin transport assembly and is arrangeable to convey the storage bin to the top level of the grid structure. The bin lift device is arranged in the storage system to receive a storage bin from a vehicle or load handling device at the top level of the grid structure and to convey the bin down in a vertical direction to a supply/picking station arranged at the ground floor in the building wherein the storage system is installed. In use, a first storage bin is initially placed on the lifting arms at the top level of the grid and lowered towards the first conveyor unit. The space between the lifting arms are wide enough to allow the first conveyor unit to pass between them. During passing, the first storage bin will remain on the first conveyor unit, while the lifting arms enters their lowermost position. The first storage bin is then transported out of the first lifting device by the first conveyor unit. After exit of the storage bin from the first bin lift device, the lifting arms may return to the top level for retrieving a second storage bin. The first and second bin lift devices are integrated into the grid framework structure and therefore, the pick station forms an integral part of the grid framework structure.

A similar bin lift mechanism integrated into the grid framework structure to supply a pick station is described in WO 2020/074717 (Autostore Technology AS). WO 2020/074717 (Autostore Technology AS) describes an access station for picking storage containers, comprising: a picking zone, at least one conveyor arranged to transport storage containers from an entry position through said picking zone and to an exit position, wherein the access station comprises: at least one tilting device arranged to tilt a storage container at least in the picking zone. Like the teaching in WO2017/211640 (Autostore Technology AS), the tilting device tilts a storage container in the picking zone when the access station is to be operated with a picking person, thereby providing the ergonomic benefits of tilting. Storage containers are received at the back side of the access station at an entry position located on an entry conveyor. The entry position is configured for connection to another conveyor, for example a storage system conveyor which transports storage containers to and from the entry position. Upon entering the access station, the entry conveyor transports the storage container in a transport direction to an exit conveyor via a tiltable access conveyor in a picking zone at the front of the access station. Entry and exit of the storage containers to the grid framework structure is via the rear of the access station. The entry position and the exit position may be each connected to a storage system conveyor. US2019330838A1 discloses modular structures comprising a connector assembly, having an upper connector coupled to a lower connector and a gusset plate sandwiched between the upper and lower connectors. The upper and lower connectors allow for coupling to adjacent upper and lower connectors, respectively, allowing for addition of a modular unit to a pre-existing modular structure.

In a storage grid, a majority of the grid columns are storage columns, i.e. grid columns where storage containers are stored in stacks. However, a grid normally has at least one grid column which is used not for storing storage containers, but which comprises a location where the container handling vehicles can drop off and/or pick up storage containers so that they can be transported to a second location (not shown in the prior art figures) where the storage containers can be accessed from outside of the grid or transferred out of or into the grid. Within the art, such a location is normally referred to as a "port" and the grid column in which the port is located may be referred to as a "delivery column". The storage grids comprise two delivery columns. A first delivery column may for example comprise a dedicated drop-off port where the container handling vehicles or load handling vehicles can drop off storage containers to be transported through the delivery column and further to an access or a transfer station, and a second delivery column may comprise a dedicated pick-up port where the container handling vehicles can pick up storage containers that have been transported through the second delivery column from an access or a transfer station. Storage containers are fed into the access station via the first delivery column and exit the access station via the second delivery column.

As the storage and retrieval system has to function in the environment in which the system operates such as the storage capacity of the grid framework structure, the size and layout of the footprint in which the storage and retrieval system, not one storage and retrieval system are the same. Thus, any peripherals units for decanting or retrieving items to and from the storage containers tend to be of a bespoke construction. This includes the shape and arrangement of the components of the inventory handling station such as the conveyor system, framework structure of the inventory handling station, etc. As the main function of the inventory handling station is to transport storage containers being dropped-off from a drop-off port in the grid framework structure to an access or transfer station where items can be picked from the storage containers, one of the main components of the inventory handling station that needs to be configured to the layout of the storage and retrieval system is the conveyor system. Depending on the transport direction of the storage container, which is generally on the same level, the conveyor system typically comprises multiple adjacent conveyor units to provide a continuous conveying surface from a drop-off/pick-up port to an access station where items can be picked or decanted from the storage containers. One or more of the multiple conveyor units can be orientated so as to provide different transport directions of the storage containers. Examples of the different orientations of the conveyor units include the different transport directions of the storage containers as well as the different orientations of conveying the storage containers by its leading edge along the longest or narrow edge of the storage container, otherwise known as the WEL (wide edge leading) or NEL (narrow edge leading) orientation.

**In** addition to the different orientations or transport directions of the conveyor system, there are a number of different configurations of conveyor units, including belt conveyor units, skate wheel conveyor units, roller conveyor units. **In** all of these different conveyor units, there are side walls provided either side of the conveyor system, which define what is termed herein as a 'conveying channel'. The side walls reduce the likelihood of items falling off the sides of the conveyor system. They achieve this by acting as a barrier so as to hinder the movement of items laterally outwards of the conveying channel relative to a longitudinal axis of the conveying system along which items are intended to be conveyed. The side walls of a conveyor unit are typically made up of a number of side guards, which are positioned adjacent to each another. Typically, the side guards are made of metal plate and there is often a small gap where the side guards meet each other between adjacent conveyor units.

As the distance between a drop-off or pick-up port and the access station or decant station can extend across multiple grid cells, it is essential that items or storage containers being conveyed across the conveying system do not become damaged or deflected by any obstructions, particularly, from the side walls of adjacent conveying units. **In** other words, there is a continuous conveying channel across multiple adjacent conveyor units from the drop-off port/pick-up port and the access station with little obstruction or camber or deflection of the storage containers as they are transported on the conveying system. To ensure that there is a continuous conveying channel, it is essential that adjacent conveyor units are aligned so as to prevent any deviation of the storage containers from its intended path along the conveying system. As a result, multiple adjacent conveyor units are mounted on a bespoke frame structure or support platform that stretches across multiple conveyor units so as to minimise any misalignment, and thereby providing a continuous conveying channel. **In** some cases, adjustments would need to be made to one or more conveyor units to ensure alignment between adjacent conveyor units. Even when attempts are made to ensure that the conveyor units are aligned, there is still the problem of the storage containers being caught up at the side walls of one or more conveyor units. To mitigate this problem, various lengths of conveyor units are sometimes utilised with the longest length of conveyor unit being used to transport storage containers along the longest side of the inventory handling station which is usually from the pick-up/drop-off port to the access station. As a result, inventory handling stations are not the same and tend to be of a bespoke construction with varying lengths of conveyor units, which adds a lot of cost and complexity to the design and assembly of the inventory handling station.

### Summary of the Invention

The present invention has mitigated the above problem by modularising the inventory handling station so that different layouts and shapes of the inventory handling station can be constructed from a single type of module rather than having a bespoke structure to suit the available footprint of the storage and retrieval system. To construct a single type of module, it is paramount that adjacent modules are able to be assembled together with little or no adjustments to the alignment of the modules such that conveyor units mounted to the modules are aligned to provide a continuous conveyor channel. The invention is defined by the appended independent claim 1. Additional embodiments are defined in the dependent claims.

To ensure adjacent modules can be assembled together, it is essential that the shape of the modular structure in an assembly is substantially regular in the sense that they are substantially equal in respect to shape and/or size of the modular structure. Typically, the shape of the modular structure is a cuboid such that multiple cuboidal shaped modules can be assembled together in any form to create different arrangements of the inventory handling station. The cuboidal shape of the modular structure is largely controlled by the orientation of the support elements (otherwise known as "struts") extending from the corners of the modular structure and the ability of a given cuboidal shape of the modular structure to be replicated amongst multiple modular structures in the assembly. If any one of the modular structures is not regular, this is reflected in the connection between adjacent modular structures in an assembly. For a regular cuboidal shape, it is essential that the angle between the support elements at the corners of the structure is substantially 90°, i.e. the support elements extend along the Cartesian coordinates in three dimensions. To control the orientation of the support elements in a modular structure, the present invention provides a connector comprising first, second and third connector portions for respectively connecting support elements in the first, second and third directions, the first, second and third directions being perpendicular to each other, i.e. along the x, y, z axes in a three dimensional Cartesian system; wherein each of the first, second and third connecting portions comprises a key that is profiled for controlling the orientation of the support elements in their respective first, second and third directions. The profile of the keys provides an indication whether the support elements are correctly orientated. If any one of the support elements is not correctly orientated, this is reflected in the connection between the keys and the support elements as the profile of the keys will prevent connection with the support elements. As the connectors form the corners of the cuboidal structure, the connector functions as a corner piece of the modular structure.

In one example of controlling the orientation of the support elements, the profile of the key comprises at least two opposing straight edges to prevent rotation of the support elements about an axis extending through the key, each of the at least two opposing straight edges defining a load bearing surface. Optionally, the profile of the key is substantially quadrilateral. To ensure that the support elements are substantially perpendicular to each other, preferably, the keys of the first and second connector portions lie in the same plane and are orientated such that a line extending along the mid-point of the keys of the first and second connector portions intersect at substantially 90° and wherein the key of the third connector portion lies in a plane perpendicular to the plane of the keys of the first and second connector portions such that the connector has a line of symmetry extending through the key of the third connector portion. More specifically, the key of the first connector portion is a mirror image of the key of the second connector portion about a line of symmetry extending through the key of the third connector portion.

To enable the keys to provide a load bearing surface, preferably, the key comprises a raised boss. To accommodate the support elements, the raised boss comprises a substantially flat mating face. Preferably, the raised boss comprises a bore, e.g. a threaded bore, to enable connection with a support element. To enable connectors from adjacent modular structures to butt up against each other when assembled together, preferably, the connector further comprises one or more mounting projections having substantially flat mating faces for mating with corresponding one or more mounting projections of one or more adjacent connectors. Preferably, the one or more mounting projections comprises a first mounting projection lying in a first mounting projection plane and a second mounting projection lying in a second mounting projection plane, the first mounting projection plane being substantially perpendicular to the second mounting projection plane such that a line extending through the first mounting projection is substantially perpendicular to a line extending through the second mounting projection. Having a connector where the first mounting projection and the second mounting projection lie in substantially perpendicular planes increases the flexibility of j oining multiple modular structures from different sides of the modular structure. To join adjacent modular structures together in an assembly, preferably, one or more mounting projections comprises a first bore and a second bore, the first bore is a threaded bore and the second bore is a non-threaded bore. To space adjacent modular structures in an assembly, particularly, when a plurality of modular structures are arranged in a stack, the connector further comprises a spacer for spacing with an adjacent connector. Alternatively the key comprises a recess.

The present disclosure provides a modular structure comprising a plurality of vertically spaced modular sections, each of the plurality of modular sections comprises four connectors according to the present disclosure, each of the four connectors in a single modular section being connected to two other connectors by a horizontal support element to form a substantially rectangular frame, and wherein each of the four connectors of vertically adjacent modular sections are connected together by a substantially vertical support element to form a frame structure, and wherein the distal ends of each of the horizontal and vertical support elements comprises an opening having a profile complementary to the profile of the keys of the connectors such that the orientation of the horizontal and vertical support elements are controlled by the profile of the keys. Alternatively, the distal ends of each of the horizontal and vertical support elements comprises a raised boss having a profile complementary to the profile of the key of the connectors if the key comprises a recess.

One or more of the plurality of vertically spaced modular sections provides a support platform for mounting various components. In the case where the modular structure forms part of an inventory handling station, one or more of the plurality of vertically spaced modular sections provides a platform for mounting a conveyor unit. To increase the structural integrity of the modular structure, particularly, from torsional forces, preferably, the connection between the horizontal support element and the vertical support element further comprises an angle bracket.

The present disclosure provides an assembly comprising a plurality of modular structures wherein adjacent modular structures in the assembly are joined together by one or more of their respective mounting projections. Due to the connectors of the present disclosure enabling control of the orientation of the support elements in substantially perpendicular directions, the resultant modular structures have a substantially cuboidal shape allowing the assembly to be composed of a regular cuboidal structure, i.e. the modular structure represents a building block or unit cell of the assembly. The one or more mounting projections of the connectors allows the modular structure to connect to any of the sides of the cuboidal structure. Due to the ability of the connectors to join each other, different arrangements of the modular structure can assembled together. Optionally, the plurality of modular structures can be arranged in a stack. Alternatively or in addition to arranging the plurality of modular structures in a stack, the plurality of modular structures can be arranged side-by-side.

One example of the present disclosure is an inventory handling station for cooperating with a storage and retrieval system, the storage and retrieval system comprising a grid framework structure comprising:
a plurality of upright columns lying in one or more vertical planes and arranged to form a plurality of grid columns for one or more containers to be stacked between and be guided by the plurality of upright columns in a vertical direction, the plurality of upright columns are interconnected at their top ends by a first set of grid members extending in a first direction and a second set of grid members extending in a second direction, the second set of grid members running transversely to the first set of grid members in a substantially horizontal plane to form a grid comprising a plurality of grid cells or grid spaces;
the first and the second set of grid members supports a first and a second set of tracks respectively at an upper level of the grid framework structure for a load handling device to move one or more storage containers on the grid framework structure,
wherein the inventory handling station assembly comprises an assembly of modular structures being arranged to support a conveying system comprising a plurality of conveying units, each of the plurality of conveying units being mounted on a respective modular section of adjacent modular structures to form a continuous conveyor.

Having the ability to ensure that adjacent modular structures are aligned provides the advantage of ensuring that multiple conveyor units supported by the assembly are in alignment so as to provide a continuous conveying system. Optionally, the assembly of modular structures being arranged to support:-
i) a port station for receiving a storage container being dropped off from and to be picked up through a grid cell;
ii) an access station to enable access to one or more storage containers dropped off from the port station, and
wherein the conveying system is arranged for conveying a storage container between the port station and the access station.

The ability to stack a plurality of modular structures enables a plurality of modular structures to be assembled to form a vertical chute configurable to cooperate with at least one upright column, the at least one vertical chute having a first opening for receiving a storage container lowered by at least one load handling device through a grid cell and a second opening to allow the container to exit the port station.

Optionally, the vertical chute comprises a bin lift device being configured to upwardly lift a storage container towards the grid structure such that, in use, the storage container can be retrieved by the least one load handling device. Optionally, the port station comprises a supply zone for receiving a storage container being dropped off through a grid cell and a pick up zone for picking up a storage container through a grid cell. Optionally, the plurality of conveyor units comprises an entry conveyor unit being configured in the supply zone, an access conveyor unit being arranged in the access station and an exit conveyor unit being arranged in the pick-up zone. Optionally, the entry conveyor unit, the exit conveyor unit and the access conveyor unit are arranged to respectively transport a storage container in a first, second and third transport directions, and wherein the first transport direction of the entry conveyor unit is opposite and parallel to the second transport direction of the exit conveyor unit and the third transport direction of the access conveyor unit is orthogonal to both the first transport direction of the entry conveyor unit and the second transport direction of the exit conveyor unit. Optionally, the entry conveyor unit, the exit conveyor unit and the access conveyor unit are arranged to respectively transport a storage container in a first, second and third transport directions, and wherein the conveyor system is arranged such that the first transport direction of the entry conveyor unit is orthogonal to both the second transport direction of the exit conveyor unit and the third transport direction of the at least one access conveyor unit. Optionally, the port station and/or the access station comprises a load cell.

The present invention further provides a fulfilment/decant system comprising:-
i) a storage and retrieval system comprising a grid framework structure comprising:
   a plurality of upright columns lying in one or more vertical planes and arranged to form a plurality of grid columns for one or more containers to be stacked between and be guided by the plurality of upright columns in a vertical direction, the plurality of upright columns are interconnected at their top ends by a first set of grid members extending in a first direction and
   a second set of grid members extending in a second direction, the second set of grid members running transversely to the first set of grid members in a substantially horizontal plane to form a grid or grid structure comprising a plurality of grid cells or grid spaces;
   the first and the second set of grid members supports a first and a second set of tracks respectively at an upper level of the grid framework structure for a robotic load handling device to move one or more storage containers on the grid framework structure,
ii) one or more load handling devices remotely operated to move the one or more containers stored in the grid framework structure, each of the one or more load handling devices comprises:
   i) a wheel assembly for guiding the load handling device on the grid structure;
   ii) a container-receiving space located above the grid structure; and
   iii) a lifting device arranged to lift a single container from a stack into the container-receiving space,
iii) an inventory handling station according to the present invention, said inventory handling station being configured to receive one or more storage containers from the storage and retrieval system.

### Description of the Drawings

Further features and aspects of the present invention will be apparent from the following detailed description of an illustrative embodiment made with reference to the drawings, in which:
Figure 1 is a schematic diagram of a grid framework structure according to a known system.
Figure 2 is a schematic diagram of a top down view showing a stack of bins arranged within the framework structure of Figure 1.
Figure 3 is a schematic diagram of a system of a known load handling device operating on the grid framework structure.
Figure 4 is a schematic perspective view of the load handling device showing the lifting device gripping a container from above.
Figure 5(a) and 5(b) are schematic perspective cut away views of the load handling device of Figure 4 showing (a) a container accommodating a container receiving space of the load handling device and (b) the container receiving space of the load handling device.
Figure 6 is a top plan view of a fulfilment centre incorporating a mezzanine to accommodate the inventory handling station assembly according to an embodiment of the present invention.
Figure 7 is a perspective front view of an inventory handling station assembly according to an embodiment of the present invention.
Figure 8 is a top plan view of the conveyor system according to an embodiment of the present invention.
Figure 9 is a top plan view of the conveyor system according to another embodiment of the present invention.
Figure 10 is an exploded view of a modular structure according to the present disclosure;
Figure 11 is an exploded view of a corner section of the modular structure shown in Figure 10.
Figure 12 is a perspective view of a corner piece according to the present disclosure;
Figure 13 is a top plan view of the corner piece showing the orientation of the raised bosses for controlling the orientation of the support elements.
Figure 14 is a perspective view of an assembly of the modular structures supporting a conveying system shown in Figure 10 into an L shaped configuration.
Figure 15 is a top plan view of the corner piece showing the orientation of the mounting projections for joining with a neighbouring corner piece.
Figure 16 is a perspective view of juxtaposed corner pieces showing the mating of the corresponding mounting projections.
Figure 17 is a side view of the assembly shown in Figure 14.
Figure 18 is a top plan view of the assembly of the modular structures shown in Figure 14.
Figure 19 is a perspective view of a different arrangement of the modular structures showing the stacking of the modular structures according to the present invention.
Figure 20 is a perspective view of the mating of stacked corner pieces according to the present disclosure;
Figure 21 is a perspective view of an assembly of modular structures with cladding.
Figure 22 is a perspective view of an example of a panel used to clad the modular structure shown in Figure 21.

### Detailed Description

It is against the known features of the storage system such as the grid framework structure and the load handling device described above with reference to Figures 1 to 5, the present invention has been devised. In a typical fulfilment centre, a large variety of items, such as grocery items are stored in storage bins or containers and the storage bins or containers are stored in one or more stacks in the grid framework structure, more specifically within grid columns. The grid columns are formed by a plurality of upright columns or vertical uprights arranged as vertical storage locations. Individual containers may be stacked in vertical layers, and their locations in the grid framework structure or "hive" may be indicated using co-ordinates in three dimensions to represent the load handling device or a container's position and a container depth (e.g. container at (X, Y, Z), depth W). Equally, locations in the grid framework structure may be indicated in two dimensions to represent the load handling device or a container's position and a container depth (e.g. container depth (e.g. container at (X, Y), depth Z). For example, Z=1 identifies the uppermost layer of the grid framework structure, i.e. the layer immediately below the rail or track system, Z=2 is the second layer below the rail system and so on to the lowermost, bottom layer of the grid framework structure. A majority of the grid columns in the grid framework structure are storage columns.

A typical order fulfilment system comprises a bin or container filling station, a storage and retrieval system, a plurality of order picking stations, an order container handling and sortation system and dispatch facilities. Details of an order fulfilment system are described in PCT/IB2014/062165 (Ocado Innovation Limited).

In the order fulfilment system such as the one described in PCT/IB2014/062165 (Ocado Innovation Limited), individual containers are stored within the storage and retrieval system and can contain one or more items, which may be identical. The storage and retrieval system comprises the grid framework structure where storage bins or containers are stored in grid columns.

To pick an order comprising different items, it is often necessary to retrieve items from multiple storage containers. Such containers can be retrieved from the storage and retrieval system and brought to a desired order picking system. Specific containers required for fulfilment of orders are accessed by a robotic load handling device operative on the grid framework structure. The robotic load handling device preferably comprises a control unit which receives control signals from a radio communications unit of a control system or a central control system concerning information on where to pick up and deliver a storage bin or container in the grid framework structure. The control system controls the operation of one or more robotic load handling devices operative on the grid framework structure and comprises one or more processors, a memory (e.g. read only memory and random access memory) and a communication bus. The memory can be any storage device commonly known in the art and includes but is not limited to a RAM, computer readable medium, magnetic storage medium, optical storage medium or other electronic storage medium which can be used to store data and accessed by the one or more processors.

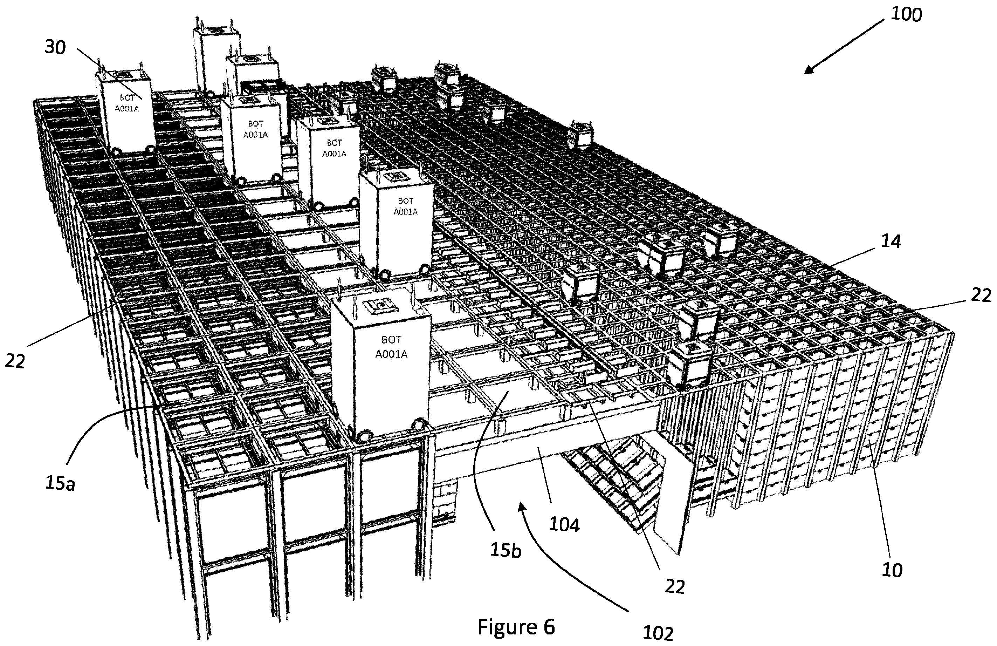

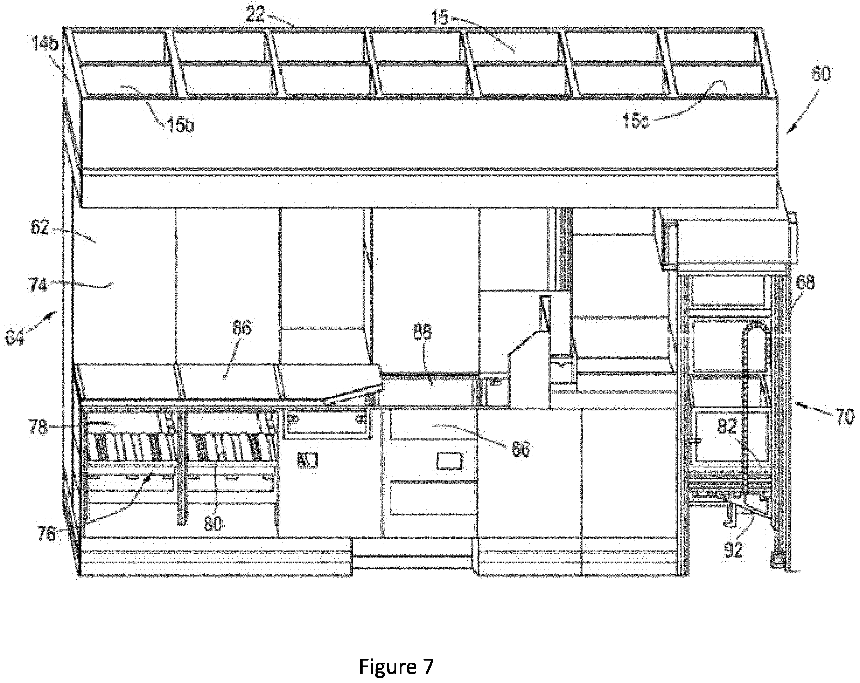

At least one grid column of the grid framework structure is not used for storing containers and typically comprises a location where a robotic load handling device can drop off and/or pick up storage containers or bins to and from a pick or supply station outside of the grid framework structure. Within the art, such a location is normally referred to as a "port" and corresponds to the grid cell where a storage bin or container are dropped off or picked up. Depending on whether the port is located for drop off or pick up of a storage container, the grid column where the port is located may be referred to as a "delivery column" located at a drop off port and a "retrieval column" located at a pick up port. A separate area is provided adjacent the grid framework structure to accommodate various stations including the pick/decant stations such as the service station, charge station etc. Typically, the separate area is provided by incorporating a mezzanine supported by vertical beams in amongst adjacent grid framework structures as shown in Figure 6. The mezzanine 104 provides a tunnel to accommodate, for example, a pick station and/or anyone of the above described stations. Figure 6 shows a grid framework structure 14 either side of a tunnel 102 created by the mezzanine 104 suitable for accommodating the inventory handling station assembly of the present invention. The grid or grid structure 22 from adjacent grid framework structures extends across the top of the mezzanine 104 to connect to the grid 22 either side of the mezzanine 104. For the purpose of the present invention, the picking/restocking station may be referred to as an inventory handling station assembly which has an access station that can function both as a picking station and/or a restocking station. One or more storage bins or containers 10 are stacked in grid columns 15a (first grid columns) either side of the tunnel 102 created by the mezzanine 104. The grid columns vary in height depending on the number of storage bins or containers stacked in the grid columns. The inventory handling station assembly is located below the grid columns 15b, 15c (second grid columns) that extends across the top of the mezzanine 104 such that one or more of the grid columns 15b, 15c on the mezzanine 104 represent the drop-off and pick-up port columns (see Figure 7).

The inventory handling station assembly cooperates with the storage and retrieval system to provide a fulfilment system 100 for the fulfilment of one or more orders. A typical inventory handling station 60 as shown in Figure 7 comprises one or more chutes 62 forming a supply zone 64, an access station 66 and one or more bin lift devices 68 forming a buffer zone 70. By reference to its name, the one or more chutes 62 allows a robotic load handling device operative on the grid framework structure 14b to lower a storage bin or container without any assistance from the one or more chutes 62. This could be under the action of gravity where the storage bin or container is allowed to descend down the chute 62 under the weight of the storage bin or container and/or being lowered by the lifting or winch mechanism of the load handling device.

One or more items are picked from or loaded into one or more storage bins or containers in the access station 66 depending on whether the access station 66 functions as a pick station or a restocking station. The one or more chutes 62 and the one or more bin lift devices 68 are arranged to cooperate with the grid framework structure 14b above. The grid framework structure 14b comprises a plurality of upright columns lying in one or more vertical planes and arranged to form a plurality of vertical locations or vertical grid columns 15 for containers to be guided by the plurality of upright columns in a vertical direction. The plurality of vertical grid columns extends across the one or more chutes 62 and the one or more bin lift devices 68 of the inventory handling station assembly 60 (see Figure 7). The plurality of upright columns are interconnected at their top ends by a first set of grid members extending in a first direction and a second set of grid members extending in a second direction, the second set of grid members running transversely to the first set of grid members in a substantially horizontal plane to form a grid comprising a plurality of grid cell or grid spaces. The plurality of grid cells are sized to allow a storage container to enter or exit a grid cell. The plurality of grid cells comprises a drop off port and a pick-up port that is arranged to cooperate with the one or more chutes 62 and the one or more bin lift devices 68 respectively. More specifically, the grid column to which the drop off port (delivery column 15b) and the pick port (retrieval column 15c) are located are arranged to respectively cooperate with the one or more chutes 62 and the one or more bin lift devices 68 of the inventory handling station assembly 60.

The inventory handling station assembly of the present invention can be arranged as a standalone framework that divides the inventory handling station assembly into the supply zone 64, the buffer zone 70 and the access station 66. The one or more chutes 62 of the supply zone 64 comprises at least two vertical guides that are receivable in a grid column 15b of the grid framework structure and are arranged to guide a storage bin or container down the grid column 15b into the supply zone 64 via the drop-off port. In terms of definition, the grid column in which the drop off port in the grid is located is termed a delivery column 15b. Likewise, the grid column in which the pick-up port in the grid is located is termed a retrieval column 15c. A conveyor system 76 transports the storage bin or container from the supply zone 64 to the access station 66 and subsequently to the buffer zone 70 where the storage bin or container is vertically accumulated to be picked up by a load handling device operative on the grid framework structure 14b and either returned to its original destination in the grid framework structure or a new destination in the grid framework structure. In the particular embodiment of the present invention, the conveyor system 76 comprises multiple conveyors units, namely an entry conveyor unit 78, at least one access conveyor unit 80 and an exit conveyor unit 82, and arranged to transport the storage bin or container from the supply zone 64 to the buffer zone 70 via the access station 66. The storage bin or container is paused at the access station 66 which functions as a pick station or a restocking station. The multiple conveyor units are arranged adjacent to each other or connected to each other such that a storage bin is transported from one conveyor unit to an adjacent conveyor unit as it travels along the conveyor system 76.

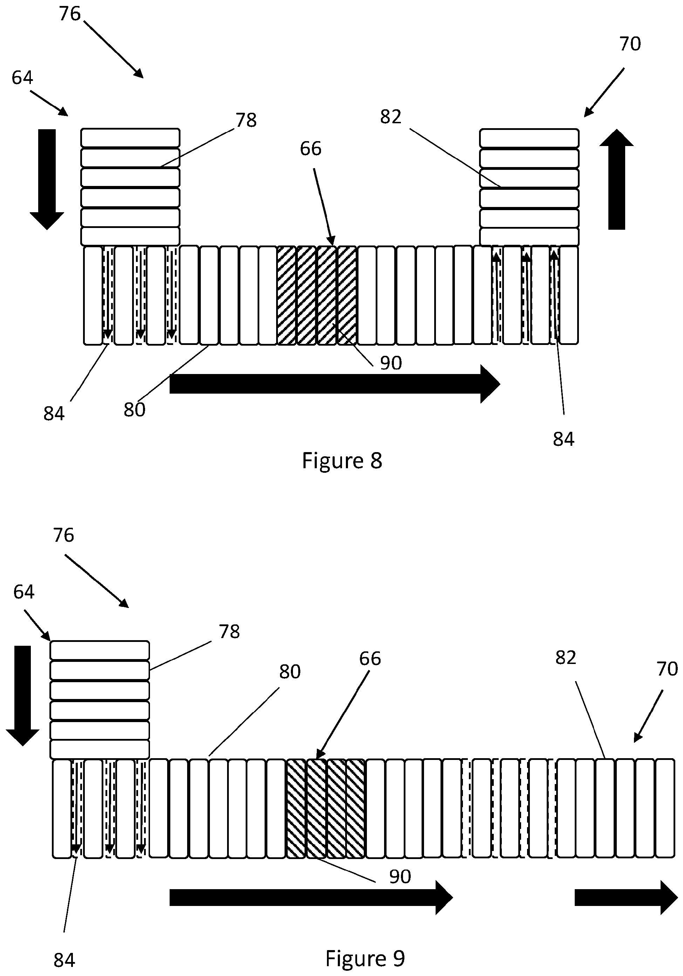

The entry conveyor unit 78 is arranged in the supply zone 64, more specifically the entry conveyor unit 78 is arranged before each of the one or more chutes 62. As shown in Figure 7, the entry conveyor unit 78, the at least one access conveyor unit 80 and the exit conveyor unit 82 are on the same level. Similarly, the exit conveyor unit 82 is arranged in the buffer zone 70. Each conveyor unit may comprise any suitable arrangement of belt(s), chain(s) and/or rollers well known in the art of conveyor systems. In the particular embodiment shown in Figure 7, the entry conveyor unit 78, the at least one access conveyor unit 80 and the exit conveyor unit 82 comprises a plurality of roller conveyors for transporting storage bins or containers along a path on the conveyor system 76. As shown in Figure 7, the conveyor system 76 is mounted on a roller frame. The entry conveyor unit 78 and the exit conveyor unit 82 are arranged to accommodate a single storage container on top. Also shown in Figure 7, the access station 66 comprises a work surface 86 above the at least one access conveyor unit 80 and having an opening 88 allowing an operator to gain access to a storage bin or container on the at least one access conveyor unit 80 below. The path or transport direction of the entry conveyor unit 78 may be parallel and opposite to the path or transport direction of the exit conveyor unit 82 such that the path or transport direction of the at least one access conveyor unit 80 is perpendicular or orthogonal to the path or transport direction of both the entry conveyor unit 78 and the exit conveyor unit 82 (as shown in Figure 8). In other words, the storage bin or container travels in a U-shaped path along the conveyor system 76 as shown in Figure 8, i.e. the storage bin changes direction twice along the conveyor system. The at least one access conveyor unit 80 extends between the entry conveyor unit 78 and the exit conveyor unit 82 and can comprise multiple conveyor units arranged adjacent each other in the horizontal plane such that a storage bin or container is transported from one conveyor unit to an adjacent conveyor unit along the access conveyor unit 80. Typically, one or more of the rollers of the at least access conveyor unit 80 and optionally, the entry conveyor unit 78 and/or exit conveyor unit 82 comprises an integrated drive motor (not shown), whilst the remaining rollers may be connected by belts (not shown) to the drive roller, or they may be passive. The shaded area 90 of the at least one access conveyor unit 80 is arranged below the opening 88 in the work surface 86 shown in Figure 7. Optionally and as shown in Figure 9, the path or transport direction of the exit conveyor unit 82 extends longitudinally in the same transport direction of the at least one access conveyor unit 80, i.e. the exit conveyor unit 82 is an extension of the at least one access conveyor unit 80. Here, the path or transport direction of the entry conveyor unit 78 is perpendicular or orthogonal to the path or transport direction of both the at least one access conveyor unit 80 and the exit conveyor unit 82 such that the storage bin or container travels in an L-shaped path along the conveyor system 76, i.e. the storage bin or container changes direction once as they travel from the supply zone to the buffer zone.

Figure 8 is an example where the leading edge of the storage container is the narrow end of the storage container (NEL) when it is transported across the entrance conveyor unit to the at least one access conveyor unit 80. Optionally, the conveyor system can be arranged such that the path or transport direction of the storage bin can follow both a U-shaped path and an L-shaped path along the conveyor system 76. The combination of the U-shaped path and the L-shaped path permits multiple storage bins or containers to be queued at the buffer zone 70 before being lifted towards the grid for subsequent retrieval by a load handling device operative on the track or rail on the grid. This allows multiple storage bins or containers to be processed through the access station 66 in comparison to prior art solutions. The combination of the U-shaped path and the L-shaped path allows for a relatively small width of the inventory handling station assembly for processing multiple storage bins or containers at the access station 66 in comparison to prior art solutions.

An additional conveyor unit 84 (see Figure 8 and 9) positioned adjacent the entry conveyor unit 78 and/or the exit conveyor unit 82 is integrated into the at least one access conveyor unit 80. In the particular embodiment of the present disclosure, the additional conveyor unit or the directional change conveyor unit 84 comprises one or more rollers or belts or chains laterally disposed between or which interdigitate between the rollers of the at least one access conveyor unit and are arranged to be driven transversely to the transport direction of the at least one access conveyor unit (see arrows in Figure 8 and 9). The additional conveyor unit or directional change conveyor unit 84 is lowered or raised by a lifting mechanism (not shown) relative to the rollers of the at least one access conveyor unit 80 such that in the raised position, the directional change conveyor unit 84 is in contact with a storage bin causing the directional change conveyor unit 84 to drag or pull the storage bin from the entry conveyor unit 78 onto the at least one access conveyor unit 80. This is shown by the arrows in Figure 8 and Figure 9. An operator can pick or supply a desired item(s) to or from the storage bin in the access station 66 depending on whether the access station 66 functions as a pick station or a restock station. The access station can optionally comprises a weighing cell for measuring the weight of items in the access station. In the case where the at least one access conveyor unit 80 comprises multiple conveyor units, the access conveyor unit 90 (shown by the light shading in Figure 8 and 9) arranged below the opening 88 in the work surface 86 can be mounted on a weighing cell or alternatively, the weighing cell can be positioned anywhere along the at least one access conveyor unit 80. The weighing cell is arranged below the at least one access conveyor unit 80 so as to weigh a storage bin in the access station 66. The weighing cell can be a load cell or any other weighing cell commonly known in the art. A control panel (not shown) at the front of the access station 66 displays the weight of the storage bin as items are picked from or loaded into the storage bin. For example, when operated as a pick station, the weighing cell measures the weight of the storage bin or container as one or more items are picked from the storage bin. A storage control and communication system is used monitor the inventory or stock of a particular item by recording the weight of the storage bin as items are picked from the storage bin. This enables the storage control and communication system to keep track of the contents of each of storage bins or containers stored within the grid framework structure. When the contents of a particular storage bin or container having a particular attribute or SKU is running low as measured by the weighing cell and recorded by the storage control and communication system, a notification is sent to an operator, e.g. via the control panel, to restock the storage bin.

To prevent one or more storage bins or containers backing up at the access station 66, the buffer zone 70 comprises one or more bin lift devices 68 so as to allow one or more storage bins to be vertically accumulated in the buffer zone 70. The bin lift device 68 comprises lifting arms and a lifting mechanism. In the particular embodiment of the present disclosure, the bin lift device 68 comprises a pair of or two lifting arms 92. The space between the lifting arms 92 are wide enough to allow the exit conveyor unit 82 to pass between the lifting arms 92 as the lifting arms 92 descend past the exit conveyor unit 82. In use, the lifting arms 92 descends to a lowermost level below the exit conveyor unit 82 such that the lifting arms 92 can engage with a bottom wall of the storage bin on the exit conveyor unit. The storage bin or container is lifted from a lowermost position on the exit conveyor unit 82 to an uppermost position towards the grid framework structure 14b such that the storage bin is vertically spaced apart from the exit conveyor unit 82. This allows a second storage bin or container to enter the exit conveyor unit 82 and be vertically accumulated below the storage bin or container there above. The storage bin at the uppermost position waits until a load handling device operative on the grid at an upper level is able to retrieve the storage bin or container through a pick-up port via a retrieval column 15c. More specially, a grabber device of the load handling device is able to grab the storage bin or container at the uppermost level and lift the storage bin or container into a container receiving space of the load handling device. A sensor detects the retrieval of the storage bin at the uppermost level which sends a signal to a control system or controller to lower the lifting arms 92 below the second storage bin or container resting on the exiting conveyor unit 82 which is subsequently lifted to the uppermost level, allowing for a third storage bin or container queuing at the buffer zone to enter the buffer zone 70 via the exit conveyor unit 82. The whole process is repeated as storage bins or containers enter the buffer zone 70.

A bin lift device 68 can comprise multiple pairs of lifting arms 92 that are vertically spaced apart so as to allow multiple storage bins to be vertically accumulated at different heights in the buffer zone 70. For example, a first pair of lifting arms can be arranged to lift a first storage bin to a first height, a second pair of lifting arms can be arranged to lift a second storage bin to a second height and so on. This allows multiple storage bins to be vertically accumulated at different heights in the buffer zone 70. Added to this, one or more bin lift devices 68 can be arranged adjacent to each other. To conserve space and to reduce the footprint of the inventory handling station assembly 60, a first bin lift device can be arranged at the end of the at least one access conveyor unit 80 so that a storage bin or container can be transported along the same path of the access conveyor unit 80 into the first bin lifting device. If the first bin lifting device is fully occupied, the storage bin can be instructed to change direction into an adjacent second bin lift device, e.g. in a direction perpendicular to the transport direction of the at least one access conveyor unit. This can be achieved by controlling the directional change conveyor unit 84 adjacent the buffer zone 70 to transport the storage bin into the second bin lift device. Here the control system or a separate controller monitors the occupancy of the first bin lift device and the second bin lift device and decides whether to transport the storage bin into the first bin lift device or the second bin lift device depending on their occupancy. The occupancy of the bin lift device 68 is determined by one or more sensors to detect the presence of a storage bin or container in the bin lift device. Examples of sensors include but are not limited to proximity sensors such as light sensors.

One of the main criteria of the conveying system 76 is to make sure that the storage containers or items transported along its conveyor channel reaches its intended destination without the possibility of the storage containers or items falling off the sides of the conveying system 76. Whilst attempts are made to reduce the likelihood of items or storage containers from falling off the sides of the conveying system by mounting side walls or barriers either side of the conveying system, there is still the problem of snagging of one or more items or storage containers by one or more of the conveyor units being misaligned causing a blockage in the conveying system. This is particularly the case where adjacent conveyor units in the conveying system are not perfectly aligned causing one or more items or storage containers to deviate from their intended path on the conveying system. Thus, it is essential that adjacent conveyor units are perfectly aligned to mitigate deviation of the transported items or storage containers from their intended route on the conveying system. To reduce the likelihood of misalignment, multiple conveyor units are generally mounted on a bespoke conveyor frame or base structure that extends across multiple grid cells. The bespoke conveyor frame is generally a one piece structure so minimising any possibility of misalignment of the conveyor units. Equally, the length of the conveyor units in a conveying system varies to cater for the different transport lengths of the conveying system. For example, the length of at least one access conveyor unit 80 in Figures 8 and 9 can be a single elongated conveyor unit that extends across multiple grid cells between the delivery column 15b and the retrieval column 15c rather that separately joined short conveyor units. As a result, not one inventory handling station is the same since they tend to have bespoke conveying systems which is dependent on the available space in the storage and retrieval system to capture the storage containers being dropped off from the grid structure.

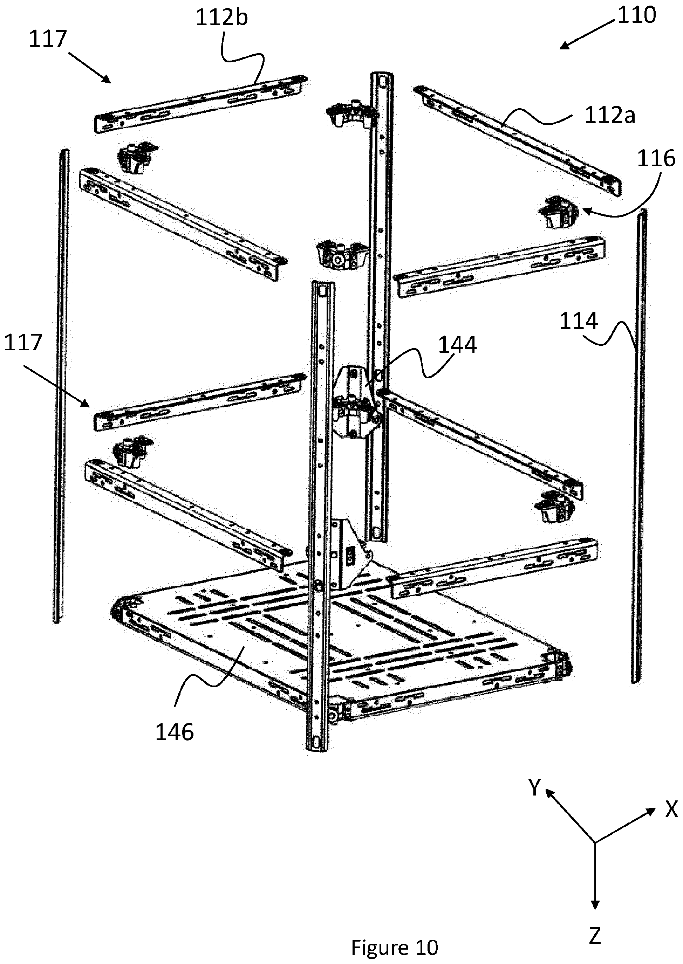

The present invention has mitigated the above problem by modularising the inventory handling station so that the inventory handling station can be built up from a regular arrangement of modules or modular structures 110, wherein each modular structure 110 forms a unit cell of the inventory handling station. The pattern of the inventory handling station is dictated by the arrangement of the modular structures. To form an inventory handling station from an assembly of modular structures 110, each of the modular structures is substantially the same in respect to shape and size. A repetitive pattern of modular structures can then be assembled into a frame or support structure for supporting the different components of the inventory handling station discussed above, e.g. conveying system. When assembled together, the assembly provides a substantially aligned frame for supporting multiple conveyor units in alignment. In the particular embodiment shown in the exploded view of a single modular structure 110 in Figure 10, the single modular structure 110 has a cuboidal frame structure formed from a plurality of horizontal 112a, 112b and vertical 114 support elements or struts connected at the corners by a connector 116. To ensure that the modular structure 110 has a regular cuboidal structure, it is necessary that the horizontal 112a, 112b and vertical support elements 114 at the corners of the modular structure are substantially perpendicular to each other. The basic building block of a cuboidal modular structure has eight external corners and twelve support elements, wherein four of the twelve support elements are vertical and eight of the twelve support elements are horizontal. In the particular embodiment shown in Figure 10, the geometric shape of the modular structure has a rectangular cuboidal structure where all of the angles are substantially right angles and opposite edges of the cuboidal structure are equal. The angle that the support elements make at the corners of the modular structure is controlled by a connector 116. For the purpose of definition and since the connector forms the corners of the modular structure, the connector can be broadly defined as a corner piece 116.

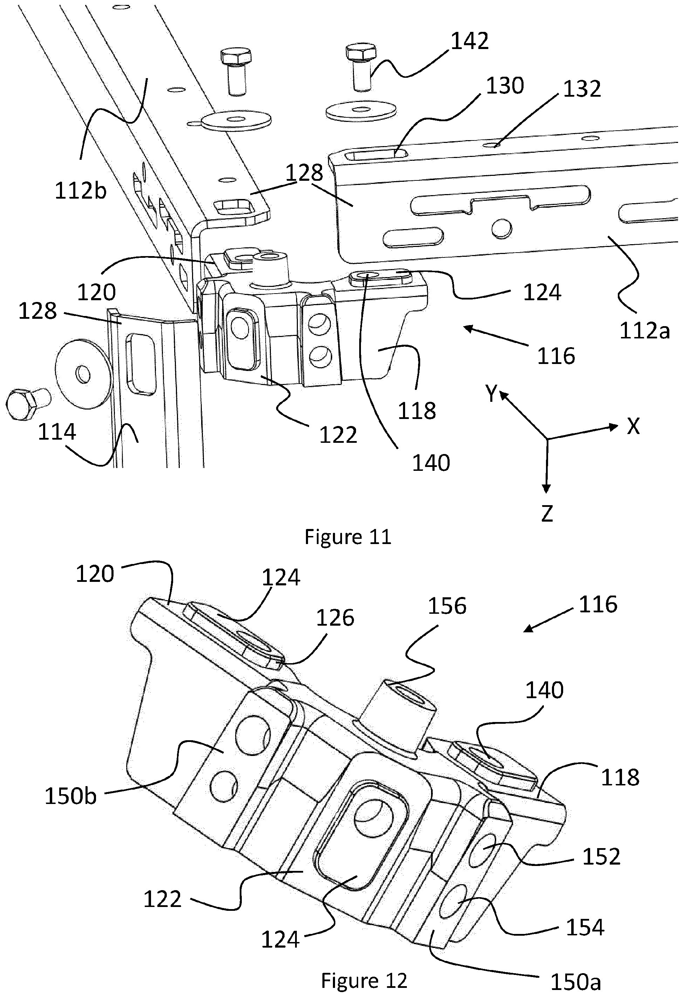

The particular example of the modular structure according to the present invention shown in Figure 10 can be broken down into a plurality of vertically spaced modular sections 117, each of the plurality of modular sections 117 providing a mount for supporting a component unit of the inventory handling station, e.g. a conveyor unit. Each of the plurality of modular sections 117 are assembled from four corner pieces 116, wherein each of the four corner pieces 116 in a single modular section 117 is connected to two other corner pieces 116 by a horizontal support element or strut 112a, 112b to form a substantially rectangular frame lying in a substantially horizontal plane (see Figure 11). Each of the plurality of modular sections 117 are vertically spaced apart by connecting each of the four corner pieces 116 of vertically adjacent modular sections 117 together by a vertical support element or strut 114 to form a cuboidal structure. In order to ensure that the support elements 112a, 112b, 114 are substantially perpendicular to each other at the corners of the modular structure, the connectors or corner pieces 116 have keying in features 124 that control the orientation of the support elements. In the present application, the terms 'keying in' and 'key' are used interchangeably. For a cuboidal structure, the keying in features control the orientation of the support elements at right angles to each other in the horizontal plane and in the vertical plane, i.e. in the x, y and z directions of a Cartesian coordinate system. An example of a corner piece 116 is shown in Figures 11 to 13, and comprises first 118, second 120 and third 122 connecting portions for connecting to support elements 112a, 112b, 114 so that they extend in the first, second and third directions; the first, second and third directions being perpendicular to each other, i.e. in the x, y and z directions of a Cartesian coordinate system. To control the orientation of the support elements in the first, second and third directions, the keying in feature 124 at each of the first, second and third connecting portions 118, 120, 122 is profiled for controlling the orientation of the support elements 118, 120, 122 in their respective first, second and third directions. Not only should the keying in feature 124 be able to control the orientation of the support elements 112a, 112b, 114 but it must also be able to provide a load bearing surface 126 to resist distortion of the cuboidal shape of the modular structure 110. In the particular embodiment of the present disclosure, this is provided by a raised or protruding boss 124 that is profiled to offer a load bearing surface 126 to prevent movement of the support elements 112a, 112b, 114 in their respective horizontal or vertical plane.

To limit movement of the support elements 112a, 112b, 114 when mounted to the raised boss 124, the connecting ends 128 of the support elements 112a, 112b, 114 comprise an opening 130 that is profiled to be seated in a particular orientation on the raised boss 124. In particular, the profile of the openings 128 in the connecting ends 128 of the support elements 112a, 112b, 114 are formed to a tight tolerance so that the size of the openings 130 are slightly larger than the size of the raised boss 124 to enable the raised boss to be received within the openings at the connecting ends of the support elements in a tight fit. An example where the openings in the connecting ends of the support elements are offered up to the raised bosses of the first, second and third connecting portions of the connector is shown in Figure 11. The profile of the opening 130 has a shape corresponding to the shape of the profile of the raised boss 124 such that there is only one orientation in which the support element can connect to the corner piece 116. This allows the profile of the raised boss 124 to dictate the orientation of the support elements 112a, 112b, 114 and prevents connection to the raised boss 124 should the orientation be different to the orientation dictated by the raised boss. There are numerous scenarios when the connecting ends 128 of the support elements 112a, 112b, 114 are prevented from engaging with the raised bosses 124 of the corner piece 116. For example, the lengths of the opposing support elements are not substantially equal causing a distortion in the cuboidal shape of the modular structure, and/or the support elements are offered up to the corner pieces incorrectly. In the particular embodiment shown in Figure 11, the raised boss 124 has a substantially rectangular profile providing at least two opposing straight edges which is configured to be received within a correspondingly shaped opening 130 in the connecting ends of the support element in a tight fit.

To fabricate the profile of the openings 130 of the support element 112a, 112b, 114 to a tight tolerance, preferably, the openings 130 are machined into the support elements. An example of machining the openings in the connecting ends of the support elements to a tight tolerance is using laser cutting but other forms of precision cutting of the openings in the support elements is applicable.

The support elements 112a, 112b, 114 are shown as angled beams to provide the necessary flexural rigidity when mounting component units to the modular section 117 but other cross sectional shaped support elements having the necessary flexural rigidity to support components such as a conveyor unit are applicable in the present invention, e.g. I shape, U shape. The support elements can comprise one or more mounting points 132 for securing different types of component units. In the particular embodiment of the present disclosure, the one or more mounting points 132 comprises one or more mounting holes for receiving bolts or screws or other fastener types.

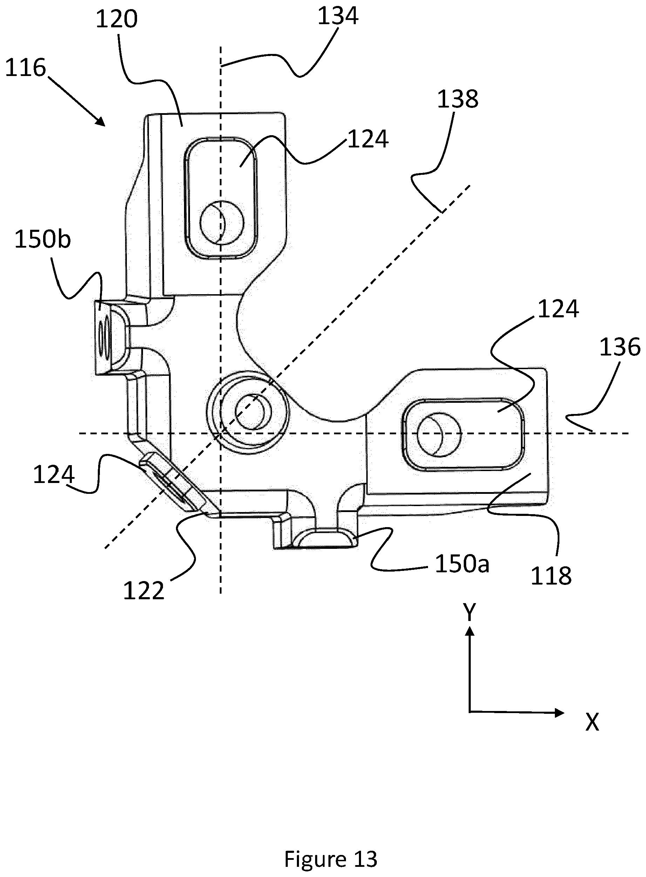

The geometric shape and/or profile of the raised bosses are tightly controlled such that the support elements connected to the raised bosses are substantially perpendicular to each other. Thus, lines 134, 136 extending along the mid-point of the raised bosses 124 of the first 118 and second 120 connecting portions lying in the horizontal plane intersect at substantially 90°. To enable the corner piece 116 to be rotated 90° so that the same type of corner piece can be used for connecting the support elements 112a, 112b, 114 at the different corners of the modular structure 110, the corner piece 116 has a line of symmetry 138 extending through the raised boss 124 of the third connector portion 122 lying in the vertical plane. The lines 134, 136, 138 of intersection and the line of symmetry are shown by the dashed lines in Figure 13. One way to tightly control the profile of the raised bosses 124 so that the raised bosses precisely engage with the openings in the support elements is to machine the profile from a single body so that the corner piece is formed as a single piece of material. For example, the corner piece 116 can be machined from a single piece of metal, e.g. aluminium. However, other forming methods and/or materials for fabricating the corner piece so as to tightly control the tolerance of the profile of the raised bosses are applicable.

For example, the use of additive manufacturing and/or use of a plastic material can be alternative fabrication methods or materials to form the corner piece having raised bosses where its profile is tightly controlled. Each of the raised bosses 124 has a substantially flat mating face that provides a contact face for contacting the support element. To fix or secure the support elements 112a, 112b, 114 once mounted to the corner piece 116, the raised bosses 124 can comprise a threaded bore 140 to receive a threaded bolt 142 as shown in Figure 11. To assemble the modular structure, the horizontal 112a, 112b and vertical 114 support elements are offered up to the corner pieces 116 as shown in Figure 11 such that the raised bosses are received in the openings in the connecting ends 128 of the support elements 112a, 112b, 114. The tight tolerance of the profile of the raised bosses ensure that the support elements are orientated in the correct direction. For a cuboidal structure, any discrepancy in the length or shape of opposing support elements will be apparent in the failure of the raised bosses to be received in the openings of the support elements. More specifically, the separation between the openings 130 at the distal ends of a given support element for opposing support elements are substantially equal. The more closely that the angle between the support elements at the corners approaches 90°, the greater is the ability of the corner pieces at each of the corners be able to key to the support elements.

With everything being substantially equal, the support elements are able to connect to the corner pieces such that the support elements are orientated in substantially perpendicular directions at each of the corners of the modular structure and the resultant modular structure adopts a substantially cuboidal shape. To prevent distortion of the modular structure and to increase the structural rigidity of the modular structure, a stiffener or angle bracket 144 can be used to support the horizontal support elements to the vertical support elements (see Figure 10). One or more of the modular sections 117 can support a platform 146 to provide a support surface and/or increase the torsional rigidity of the modular structure (see Figure 10). The platform 146 is shown in Figure 146 connected to the horizontal and vertical support elements in a single modular section 117 to stiffen the modular structure in the X and Y directions.

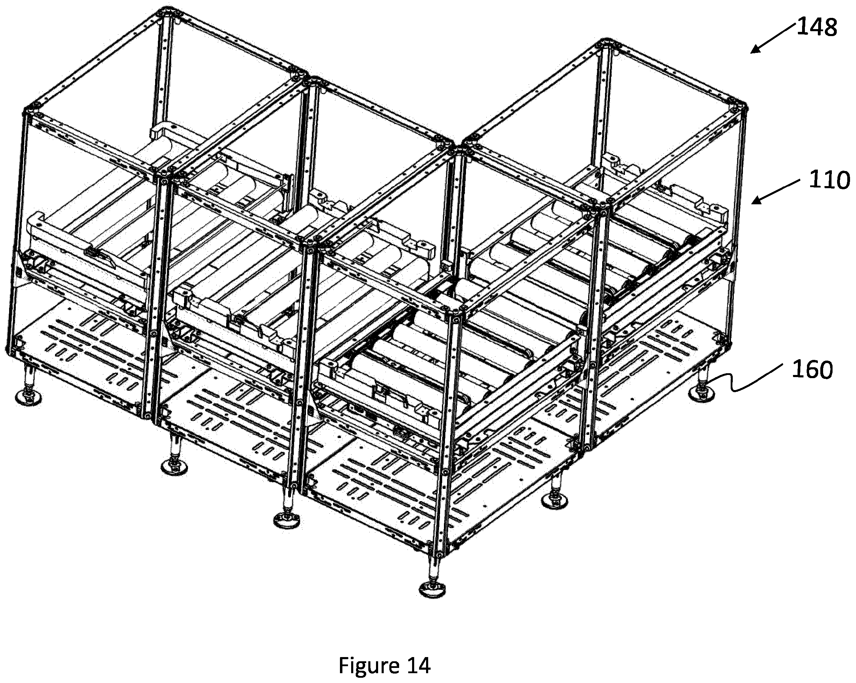

As the angle at the corners of the modular structure are substantially right angles and opposite edges are substantially equal, the resultant modular structure is able to be assembled with other similar or like modular structures in a repetitive nature or regular pattern with little risk of misalignment between adjacent modular structures. This is important where the assembly forms an inventory handling station supporting a conveying system from the drop off or pick-up port to an access station as discussed above. An example of an assembly of modular structures 148 according to the present invention for use in an inventory handling station is shown in Figure 14. Each of the modular structures 110 functions as a unit cell in the assembly 148 which is repeated in a regular fashion to form various patterns. Different arrangements of the modular structures 110 can be assembled together to form various patterns occupying different footprints. In Figure 14, the modular structures 110 are arranged side by side in an L shaped pattern or configuration. In addition or separately to arranging the modular structures side by side, the modular structures can be stacked on top of each other. In the case where the assembly is used as an inventory handling station, stacking of the modular structures provides a chute that cooperates with a port in the grid structure to form either a drop-off chute (delivery column) or a pick-up chute (retrieval column) in the supply zone or buffer zone respectively as discussed above. In the case where the chute functions as a pick-up chute to form a retrieval column as discussed above, one or more of the modular structures can optionally comprise one or more bin lift devices as discussed above.

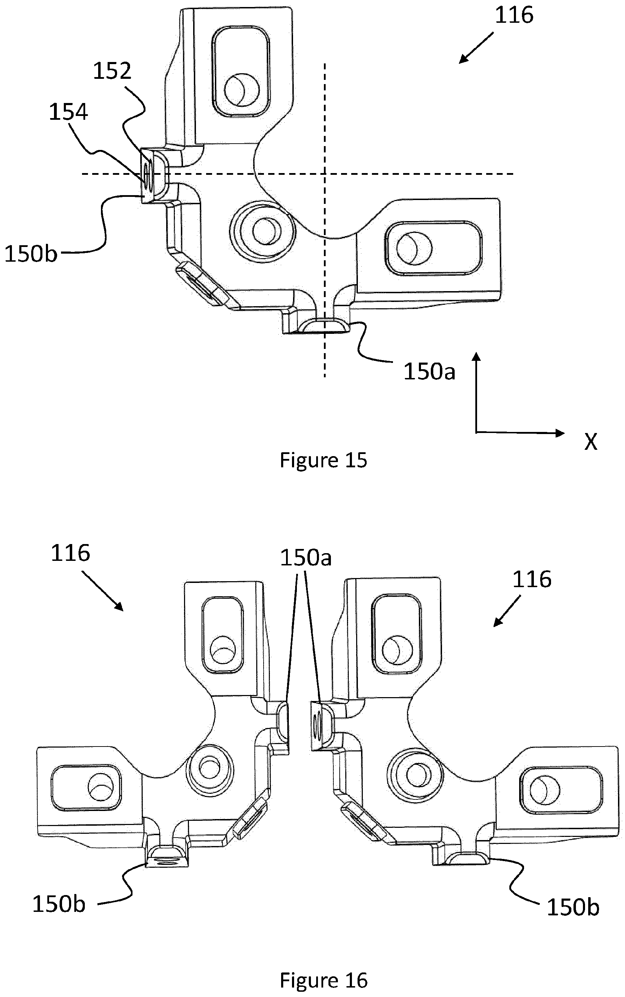

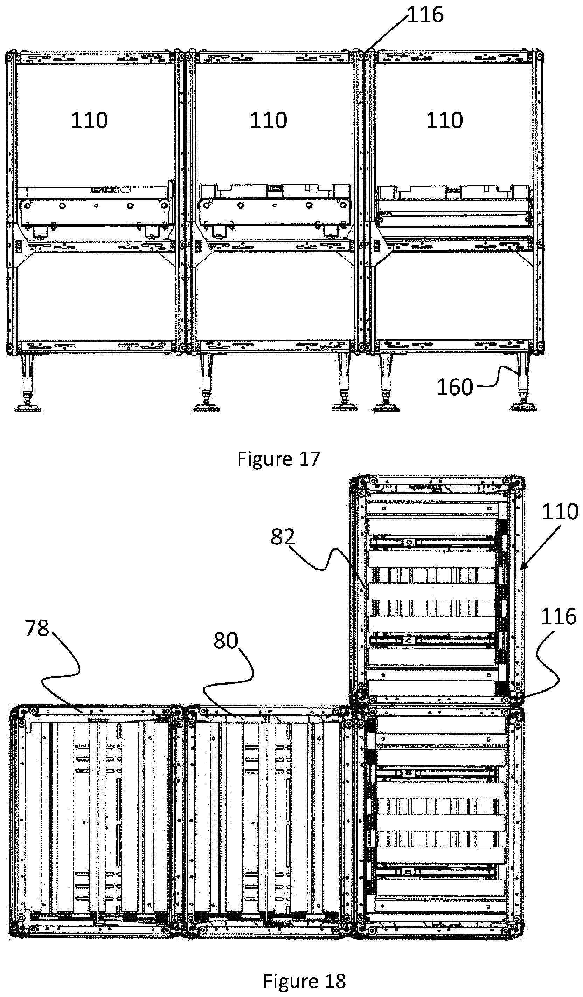

To facilitate with the joining of adj acent modular structures 110 together, the corner pieces 116 at the corners of the modular structure 110 comprise one or more mounting projections 150a, 150b, each of the one or more mounting projections 150a, 150b comprising a flat mating face for butting up against a corresponding mounting projection of a corner piece in an adjacent modular structure. In the particular embodiment shown in Figure 15, the corner piece 116 comprises a first mounting projection 150a and a second mounting projection 150b lying in their respective vertical planes that are substantially perpendicular to each other. Each of the first 150a and second 150b mounting projections comprises a mating face lying in their respective vertical planes so as to be able to butt up against a corresponding mating face of an adjacent corner piece. A top plan view of the mating of the corner pieces from adjacent modular structures is shown in Figure 16. When adjacent modular structures are brought together side-by-side as shown in the side view of the assembly of modular structures shown in Figure 17, the mating faces of the first or second mounting projections 150a, 150b of the corner pieces 116 from adjacent modular structures 110 are brought together so that they butt up against each other as shown in Figure 16 such that their respective mating faces eventually lie in the same or common vertical plane. To secure or fix adjacent corner pieces together, each of the first and second mounting projections comprises at least one bore for receiving a bolt or pin. The at least one bore can be a blind hole or through hole. In the particular embodiment shown clearly in Figure 12, each of the first 150a and second 150b mounting projections comprises a first bore 152 and a second bore 154 and at least one of the first 152 and second 154 bores has a threaded internal wall for threadingly engaging with a bolt or a screw. Having one of the first 152 or second 154 bores with a threaded internal wall and the other bore with a non-threaded internal wall has the advantage of assisting with assembling of adjacent modular structures together. Due to the symmetrical nature of the corner pieces allowing it to be rotated 90°, when the corner pieces are brought together from adjacent modular structures in an assembly (see Figure 17) such that their corresponding mating faces are in contact, a non-threaded bore is always adjacent a threaded bore. When the bores are through holes, a non-threaded bore adjacent a threaded bore allows a threaded bolt to be initially fed into the non-threaded bore so that the threads of the bolt eventually engage with the threads of the bore in the adjacent corner piece.

Assembling multiple modular structures involves bringing together separate modular structures together so that adjacent modular structures in the assembly are in juxtaposition side-by-side (see Figure 17). When each of the modular structures are substantially cuboidal, the bores in the corresponding first or second mounting projections of adjacent corner pieces at the corners of the modular structure align in the assembly for receiving a bolt. Adjacent modular structures in the assembly are secured together by threadingly engaging a bolt through the bores of the mounting projections of adjacent corner pieces. Additional modular structures can simply be bolted onto the existing assembly to change the shape or footprint of the assembly. Ultimately, the assembly comprises a regular or repeated arrangement of modular structures, each modular structure forming a unit cell in the assembly. Due to the modular nature of the inventory handling station, multiple modular structures can be assembled together in various patterns.

The uniformity of the shape and size of each of the modular structures brought on by the ability of the corner pieces of the present disclosure to connect the support elements in substantially perpendicular directions increases the ability to align adjacent modular structures together in an assembly. This is paramount where the assembly supports a conveying system comprising multiple adjacent conveyor units as it is essential that items or storage containers being transported by the conveying system do not snag the side walls of the conveying system as a result of the misalignment of adjacent conveyor units. In the particular example shown in the top view of the assembly shown in Figure 18, the conveying system 76 comprises a plurality of conveyor units arranged in an L shaped pattern incorporating the entry conveyor unit 78, the exit conveyor unit 82 and the at least one access conveyor unit 80 between the entry 78 and exit 82 conveyor unit. Various other patterns of the conveying system are permissible in the present invention and is largely dependent on the arrangement of the modular structures.

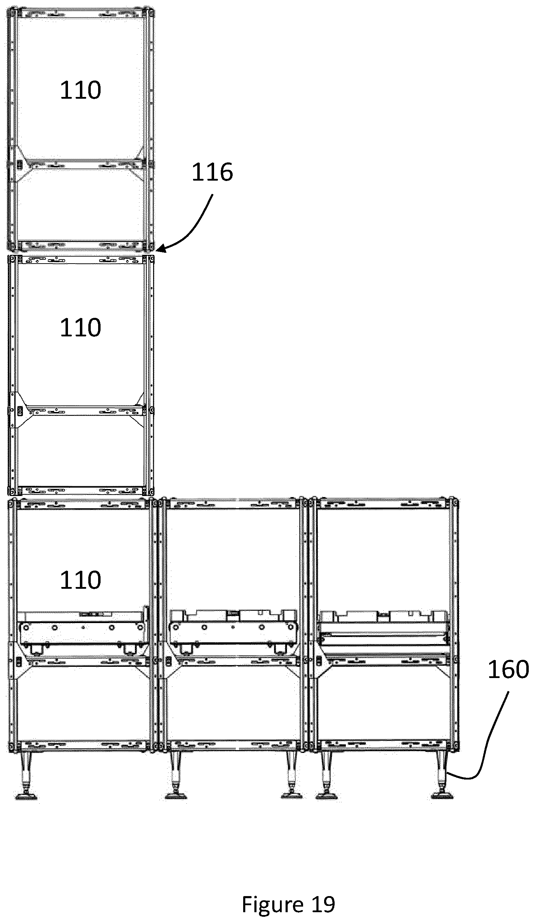

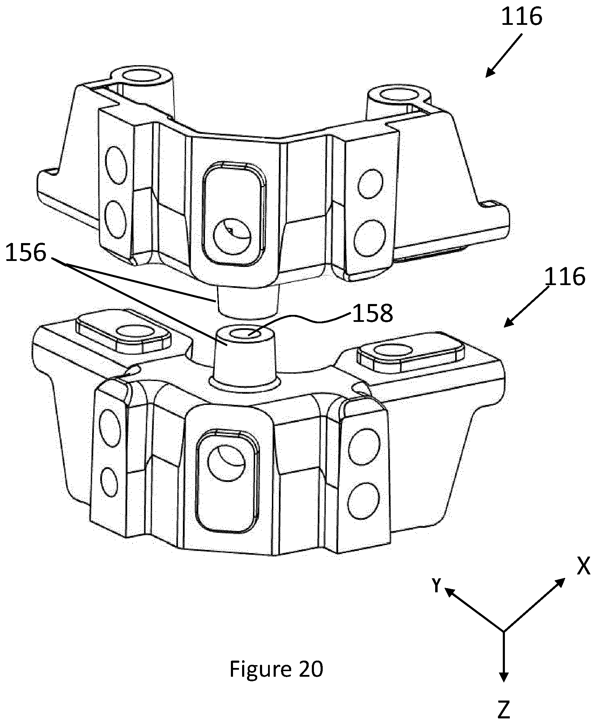

To form the vertical chute for cooperating with a port column in order to drop-off one or more storage containers onto the conveying system for transport to the access station or to pick-up one or more storage containers exiting the access station into the buffer zone as discussed above, a plurality of modular structures 110 can be stacked on top of another to form a vertical column. In addition to assembling the modular structures of the present invention side by side (see Figures 17 and 18), the corner pieces 116 of the present invention enable the modular structures to be stacked in a three tier stack as shown in Figure 19. In comparison to the mounting projections for joining the modular structure side-by-side, the corner piece optionally comprises a spacer 156 so as to space adjacent modular structures in a stack. In the particular embodiment shown in Figure 20, the spacer 156 has a frustoconical shape but other shapes to space an adjacent corner piece in a stack are applicable.

The frustoconical shape has a flat mating face for butting up against the spacer of an adjacent corner piece in a stack as shown in Figure 20. The spacer 156 comprises a bore 158 allowing adjacent modular structures to be secured together via their respective corner pieces. The spacer 156 also provides a mount for securing a foot 160 to the assembly as shown in Figure 14 and 17.

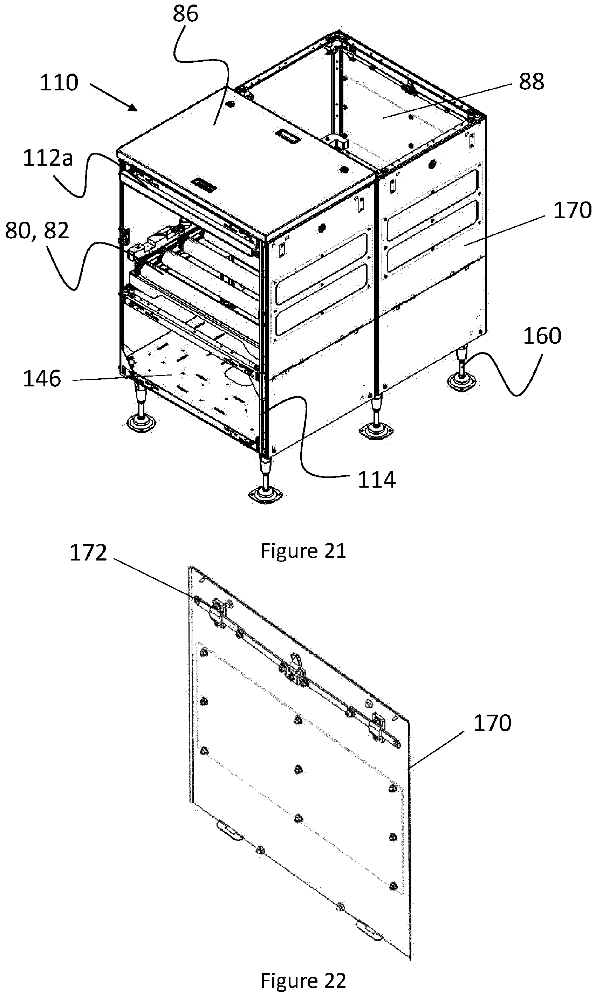

The assembly of the modular structures provide a supporting structure or mounting frame for mounting various functional components of the inventory handling station discussed above, e.g. conveyor system, bin lift device, drive motors for the conveyor system and the bin lift device, electronic and electrical components for operating the drive motors, and/or load cell. In addition to the functional components being mounted to the supporting structure or mounting frame, the exterior of the supporting structure can be cladded by one or more panels 170 to contain the functional components within an enclosure. The panels 170 can be secured to the horizontal and/or vertical support elements of the assembly of modular structures by one or more fasteners, e.g. bolts. Alternatively, the panels 170 can comprises locking tabs 172 that are configured to interlock with one or more openings (not shown) in the horizontal and/or vertical support elements 112a, 112b, 114 of the assembly of modular structures 110 (see Figure 22). Access is provided via an opening 88 in the enclosure to pick and/or decant one or more items into a storage container in transit on the conveyor unit 80, 82.

By controlling the orientation of the support elements in substantially perpendicular directions, the connector 116 of the present disclosure has multiple uses in the storage and retrieval system where alignment between adjacent structures are needed. For example, in the case of a grid framework structure where the grid openings in the grid structure are aligned with the grid columns formed by the plurality of upright columns for guiding the storage containers through the grid openings. The connector of the present disclosure can be used to control the orientation of the grid members and/or tracks in the grid framework structure so that the grid members are arranged in a grid pattern having a first set of grid members extending in the first direction and a second set of grid member extending in the second direction, the second direction being substantially perpendicular to the first direction. For example, instead of the connector 116 functioning as a corner piece having two connecting portions extending in two perpendicular directions in the horizontal plane, the connector has four connecting portions that are perpendicular to each other and lying in the horizontal plane such that the connector is cross shaped for connecting to respective grid members in a grid pattern. Like the connecting portions of the corner pieces, the profile of the keys (e.g. raised boss) of the connector controls the orientation of the grid members so that they are arranged in a grid pattern. Track elements can be mounted to the grid members for guiding the movement of one or more robotic load handling devices in the first and second direction on the grid structure. Equally plausible is that multiple of the modular structures 110 can be arranged in a grid pattern and at different heights to form a grid framework structure.

## Claims

1. An inventory handling station (60) for cooperating with a storage and retrieval system, the storage and retrieval system comprising a grid framework structure (14) comprising:
a plurality of upright columns (16) lying in one or more vertical planes and arranged to form a plurality of grid columns (15) for one or more containers (10) to be stacked between and be guided by the plurality of upright columns (16) in a vertical direction, the plurality of upright columns (16) support a grid lying in a substantially horizontal plane comprising a plurality of grid cells or grid spaces, said grid comprising a first set of grid members (18) extending in a first direction and a second set of grid members (20) extending in a second direction, the second set of grid members (20) running perpendicularly to the first set of grid members (18); the first and the second set of grid members supports a first and a second set of tracks (22a, 22b) respectively at an upper level of the grid framework structure for a load handling device (30) to move one or more storage containers (10) on the grid framework structure (14), the inventory handling station (60) comprises an assembly of modular structures (148), said assembly of modular structures (148) being arranged to support a conveying system (76) comprising a plurality of conveying units (78, 80, 82), each of the plurality of conveying units (78, 80, 82) being mounted on a respective modular section (117) of adjacent modular structures (110) to form a continuous conveyor,
wherein each of the modular structures (110) in the assembly comprises vertically adjacent modular sections (117), and wherein each of the modular sections (117) comprises at least four connectors (116), each of the at least four connectors (116) in the single modular section (117) is connected to two other connectors (116) by respective horizontal support elements (112a, 112b) to form a substantially rectangular frame; wherein the modular structure (110) is formed by connecting each of the at least four connectors of the vertically adjacent modular sections (117) by substantially vertical support elements (114) to form a frame structure;
wherein each of the at least four connectors (116) comprising a single body comprising:
i) a first connector portion (118) for connecting a support element extending in a first direction,
ii) a second connector portion (120) for connecting a support element extending in a second direction,
iii) a third connector portion (122) for connecting a support element extending in a third direction, the first, second and third directions being substantially perpendicular to each other, each of the first, second and third connecting portions (118, 120, 122) comprises a key (124) that is profiled for controlling the orientation of the support elements (112a, 112b, 114) in their respective first, second and third directions;
iv) a first mounting projection and a second mounting projection, each of the first and second mounting projections having a substantially flat mating face for mating with a corresponding mounting projection of an adjacent connector, the first mounting projection (150a) lying in a first mounting projection plane and the second mounting projection (150b) lying in a second mounting projection plane, the second mounting projection plane being substantially perpendicular to the first mounting projection plane such that adjacent modular structures in the assembly are joined together by the first and/or second mounting projections of one or more of their respective connectors;
wherein, the distal ends of each of the horizontal and vertical support elements (112a, 112b, 114) comprises an opening (130) having a profile complementary to the profile of the keys (124) of the connectors (116) such that the orientation of the horizontal and vertical support elements (112a, 112b, 114) are controlled by the profile of the keys (124).

2. The inventory handling station (60) of claim 1, wherein the assembly of modular structures (148) is arranged to support:-
i) a port station for receiving a storage container being dropped off from and to be picked up through a grid cell;
ii) an access station to enable access to one or more storage containers dropped off from the port station, and
wherein the conveying system (76) is arranged for conveying a storage container between the port station and the access station.

3. The inventory handling station (60) of claim 2, wherein the port station comprises a vertical chute (62) configurable to cooperate with at least one upright column, the at least one vertical chute (62) having a first opening for receiving a container lowered by at least one load handling device through a grid cell and a second opening to allow the container to exit from the port station.

4. The inventory handling station of claim 3, wherein the assembly of modular structures (148) further comprises a plurality of modular structures arranged in a stack to define the vertical chute (62); and optionally, the vertical chute (62) comprises a bin lift device (68) configurable to upwardly lift a storage container towards the grid such that, in use, the storage container can be retrieved by the least one load handling device.

5. The inventory handling station of any of the claims 1 to 4, wherein the port station comprises a supply zone (64) for receiving a storage container being dropped off through a grid cell and a pick up zone for picking up a storage container through a grid cell.

6. The inventory handling station (60) of claim 5, wherein the plurality of conveyor units comprises an entry conveyor unit (78) being configured in the supply zone (64), an access conveyor unit (80) being arranged in the access station (66) and an exit conveyor unit (82) being arranged in the pick-up zone; optionally, the entry conveyor unit (78), the exit conveyor unit (82) and the access conveyor unit (80) being arranged to respectively transport a storage container in a first, second and third transport directions, and wherein the first transport direction of the entry conveyor unit (78) is opposite and parallel to the second transport direction of the exit conveyor unit (82) and the third transport direction of the access conveyor unit (80) is orthogonal to both the first transport direction of the entry conveyor unit (78) and the second transport direction of the exit conveyor unit (82); and, optionally, the entry conveyor unit (78), the exit conveyor unit (82) and the access conveyor unit (80) being arranged to respectively transport a storage container in a first, second and third transport directions, and wherein the conveyor system is arranged such that the first transport direction of the entry conveyor unit (78) is orthogonal to both the second transport direction of the exit conveyor unit (82) and the third transport direction of the at least one access conveyor unit (80).

7. The inventory handling station (60) of any of the claims 2 to 6, wherein the port station and/or the access station comprises a load cell.

8. The inventory handling station (60) of any of the preceding claims, wherein the profile of the key (124) of each of the at least four connecters comprise at least two opposing straight edges to prevent rotation of the support elements about an axis extending through the key, each of the at least two opposing straight edges defining a load bearing surface; and optionally, the profile of the key (124) of each of the at least four connecters are substantially quadrilateral.

9. The inventory handling station (60) of any of the preceding claims, wherein the keys (124) of the first and second connector portions (118, 120) of each of the at least four connectors (116) lie in the same plane and are orientated such that a line extending along the mid-point of the keys of the first and second connector portions intersect at substantially 90°; and optionally, the key (124) of the third connector portion (122) of each of the at least four connectors lie in a plane perpendicular to the plane of the keys of the first and second connector portions such that the connector has a line of symmetry extending through the key of the third connector portion (122).

10. The inventory handling station (60) of any of the preceding claims, wherein the key (124) of each of the at least four connecters comprise a raised boss; optionally, the raised boss comprises a substantially flat mating face; and optionally, the raised boss comprises a bore (140).

11. The inventory handling station (60) of any of the preceding claims, wherein each of the one or more mounting projections (150a, 150b) of each of the at least four connecters comprise a first bore (152) and a second bore (154), the first bore (152) is a threaded bore and the second bore (154) is a non-threaded bore.

12. The inventory handling station (60) of any of the preceding claim, wherein each of the at least four connecters comprise a spacer (156) for spacing with an adjacent connector.

13. The inventory handling station (60) of any of the preceding claims, wherein each of the modular structures in the assembly has a substantially cuboidal structure;

14. The inventory handling station (60) of any of the preceding claims, wherein the assembly of the modular structures comprises a plurality of modular structures arranged in a stack; and optionally, the plurality of modular structures are arranged side by side.

15. A fulfilment/decant system comprising:-
i) a storage and retrieval system comprising a grid framework structure (14) comprising:
a plurality of upright columns (14) lying in one or more vertical planes and arranged to form a plurality of grid columns (15) for one or more containers to be stacked between and be guided by the plurality of upright columns in a vertical direction, the plurality of upright columns are interconnected at their top ends by a first set of grid members extending in a first direction and a second set of grid members extending in a second direction, the second set of grid members running transversely to the first set of grid members in a substantially horizontal plane to form a grid or grid structure comprising a plurality of grid cells or grid spaces;
the first and the second set of grid members supports a first and a second set of tracks respectively at an upper level of the grid framework structure for a robotic load handling device to move one or more storage containers on the grid framework structure,
ii) one or more load handling devices (30) remotely operated to move the one or more containers stored in the grid framework structure, each of the one or more load handling devices comprises:
i) a wheel assembly (34, 36) for guiding the load handling device on the grid structure;
ii) a container-receiving space (40) located above the grid structure; and
iii) a lifting device arranged to lift a single container from a stack into the container- receiving space,
iii) an inventory handling station (60) as defined in any of the claims 1 to 14, said inventory handling station being configured to receive one or more storage containers from the storage and retrieval system.

## Patentansprüche

1. Bestandsverwaltungsstation (60) zum Zusammenwirken mit einem Lager- und Bereitstellungssystem, wobei das Lager- und Bereitstellungssystem eine Gitterrahmenstruktur (14) umfasst, umfassend:
eine Vielzahl von aufrechten Stützen (16), die in einer oder mehreren vertikalen Ebenen liegen und angeordnet sind, um eine Vielzahl von Gitterspalten (15) zu bilden, damit ein oder mehrere Behälter (10) zwischen der Vielzahl von aufrechten Stützen (16) gestapelt und von der Vielzahl von aufrechten Stützen (16) in einer vertikalen Richtung geführt werden, wobei die Vielzahl von aufrechten Stützen (16) ein Gitter stützen, das in einer im Wesentlichen horizontalen Ebene liegt und eine Vielzahl von Gitterzellen oder Gitterräumen umfasst, wobei das Gitter einen ersten Satz von Gitterelementen (18), die sich in einer ersten Richtung erstrecken, und einen zweiten Satz von Gitterelementen (20), die sich in einer zweiten Richtung erstrecken, umfasst, wobei der zweite Satz von Gitterelementen (20) senkrecht zu dem ersten Satz von Gitterelementen (18) verläuft; wobei der erste und der zweite Satz von Gitterelementen einen ersten und einen zweiten Satz von Schienen (22a, 22b) jeweils auf einer oberen Ebene der Gitterrahmenstruktur stützen, damit eine Lasthandhabungsvorrichtung (30) einen oder mehrere Lagerbehälter (10) auf der Gitterrahmenstruktur (14) bewegt, wobei die Bestandsverwaltungsstation (60) eine Baugruppe von modularen Strukturen (148) umfasst, wobei die Baugruppe von modularen Strukturen (148) angeordnet ist, um ein Fördersystem (76) zu stützen, das eine Vielzahl von Fördereinheiten (78, 80, 82) umfasst, wobei jede der Vielzahl von Fördereinheiten (78, 80, 82) auf einem jeweiligen modularen Abschnitt (117) von benachbarten modularen Strukturen (110) montiert ist, um einen kontinuierlichen Förderer zu bilden,
wobei jede der modularen Strukturen (110) in der Baugruppe vertikal benachbarte modulare Abschnitte (117) umfasst, und wobei jeder der modularen Abschnitte (117) mindestens vier Verbinder (116) umfasst, wobei jeder der mindestens vier Verbinder (116) in dem einzelnen modularen Abschnitt (117) mit zwei anderen Verbindern (116) durch jeweilige horizontale Stützelemente (112a, 112b) verbunden ist, um einen im Wesentlichen rechteckigen Rahmen zu bilden; wobei die modulare Struktur (110) gebildet wird, indem jeder der mindestens vier Verbinder der vertikal benachbarten modularen Abschnitte (117) durch im Wesentlichen vertikale Stützelemente (114) verbunden wird, um eine Rahmenstruktur zu bilden;
wobei jeder der mindestens vier Verbinder (116) einen Einzelkörper umfasst, umfassend:
i) einen ersten Verbinderabschnitt (118) zum Verbinden eines Stützelements, das sich in einer ersten Richtung erstreckt,
ii) einen zweiten Verbinderabschnitt (120) zum Verbinden eines Stützelements, das sich in einer zweiten Richtung erstreckt,
iii) einen dritten Verbinderabschnitt (122) zum Verbinden eines Stützelements, das sich in einer dritten Richtung erstreckt, wobei die erste, zweite und dritte Richtung im Wesentlichen senkrecht zueinander sind, wobei jeder der ersten, zweiten und dritten Verbindungsabschnitte (118, 120, 122) eine Passfeder (124) umfasst, die profiliert ist, um die Ausrichtung der Stützelemente (112a, 112b, 114) in ihren jeweiligen ersten, zweiten und dritten Richtungen zu steuern;
iv) einen ersten Montagevorsprung und einen zweiten Montagevorsprung, wobei jeder der ersten und zweiten Montagevorsprünge eine im Wesentlichen flache Anlagefläche zum Anliegen an einem entsprechenden Montagevorsprung eines benachbarten Verbinders aufweist, wobei der erste Montagevorsprung (150a) in einer ersten Montagevorsprungsebene liegt und der zweite Montagevorsprung (150b) in einer zweiten Montagevorsprungsebene liegt, wobei die zweite Montagevorsprungsebene im Wesentlichen senkrecht zu der ersten Montagevorsprungsebene ist, so dass benachbarte modulare Strukturen in der Baugruppe durch die ersten und/oder zweiten Montagevorsprünge von einem oder mehreren ihrer jeweiligen Verbinder miteinander verbunden sind;
wobei die distalen Enden jedes der horizontalen und vertikalen Stützelemente (112a, 112b, 114) eine Öffnung (130) umfassen, die ein Profil aufweist, das komplementär zu dem Profil der Passfedern (124) der Verbinder (116) ist, so dass die Ausrichtung der horizontalen und vertikalen Stützelemente (112a, 112b, 114) durch das Profil der Passfedern (124) gesteuert wird.

2. Bestandsverwaltungsstation (60) nach Anspruch 1, wobei die Baugruppe von modularen Strukturen (148) angeordnet ist, um zu stützen:-
i) eine Übergabestation zum Empfangen eines Lagerbehälters, der durch eine Gitterzelle abgesetzt wird und durch eine Gitterzelle abgeholt werden soll;
ii) eine Zugangsstation, um Zugang zu einem oder mehreren Lagerbehältern zu ermöglichen, die von der Übergabestation abgesetzt wurden, und
wobei das Fördersystem (76) angeordnet ist, um einen Lagerbehälter zwischen der Übergabestation und der Zugangsstation zu fördern.

3. Bestandsverwaltungsstation (60) nach Anspruch 2, wobei die Übergabestation einen vertikalen Schacht (62) umfasst, der konfigurierbar ist, um mit mindestens einer aufrechten Stütze zusammenzuwirken, wobei der mindestens eine vertikale Schacht (62) eine erste Öffnung zum Empfangen eines Behälters aufweist, der von mindestens einer Lasthandhabungsvorrichtung durch eine Gitterzelle abgesenkt wird, und eine zweite Öffnung, um dem Behälter zu ermöglichen, aus der Übergabestation auszutreten.

4. Bestandsverwaltungsstation nach Anspruch 3, wobei die Baugruppe von modularen Strukturen (148) ferner eine Vielzahl von modularen Strukturen umfasst, die in einem Stapel angeordnet sind, um den vertikalen Schacht (62) zu definieren; und optional umfasst der vertikale Schacht (62) eine Behälterhebevorrichtung (68), die konfigurierbar ist, um einen Lagerbehälter nach oben in Richtung des Gitters zu heben, so dass im Gebrauch der Lagerbehälter von der mindestens einen Lasthandhabungsvorrichtung abgerufen werden kann.

5. Bestandsverwaltungsstation nach einem der Ansprüche 1 bis 4, wobei die Übergabestation eine Zuführzone (64) zum Empfangen eines Lagerbehälters, der durch eine Gitterzelle abgesetzt wird, und eine Abholzone zum Abholen eines Lagerbehälters durch eine Gitterzelle umfasst.

6. Bestandsverwaltungsstation (60) nach Anspruch 5, wobei die Vielzahl von Fördereinheiten eine Eingangsförderereinheit (78) umfasst, die in der Zuführzone (64) konfiguriert ist, eine Zugangsförderereinheit (80), die in der Zugangsstation (66) angeordnet ist, und eine Ausgangsförderereinheit (82), die in der Abholzone angeordnet ist; optional sind die Eingangsförderereinheit (78), die Ausgangsförderereinheit (82) und die Zugangsförderereinheit (80) angeordnet, um jeweils einen Lagerbehälter in einer ersten, zweiten und dritten Transportrichtung zu transportieren, und wobei die erste Transportrichtung der Eingangsförderereinheit (78) entgegengesetzt und parallel zu der zweiten Transportrichtung der Ausgangsförderereinheit (82) ist und die dritte Transportrichtung der Zugangsförderereinheit (80) orthogonal zu sowohl der ersten Transportrichtung der Eingangsförderereinheit (78) als auch der zweiten Transportrichtung der Ausgangsförderereinheit (82) ist; und optional sind die Eingangsförderereinheit (78), die Ausgangsförderereinheit (82) und die Zugangsförderereinheit (80) angeordnet, um jeweils einen Lagerbehälter in einer ersten, zweiten und dritten Transportrichtung zu transportieren, und wobei das Fördersystem so angeordnet ist, dass die erste Transportrichtung der Eingangsförderereinheit (78) orthogonal zu sowohl der zweiten Transportrichtung der Ausgangsförderereinheit (82) als auch der dritten Transportrichtung der mindestens einen Zugangsförderereinheit (80) ist.

7. Bestandsverwaltungsstation (60) nach einem der Ansprüche 2 bis 6, wobei die Übergabestation und/oder die Zugangsstation eine Wägezelle umfasst.

8. Bestandsverwaltungsstation (60) nach einem der vorhergehenden Ansprüche, wobei das Profil der Passfeder (124) jedes der mindestens vier Verbinder mindestens zwei gegenüberliegende gerade Kanten umfasst, um eine Drehung der Stützelemente um eine Achse zu verhindern, die sich durch die Passfeder erstreckt, wobei jede der mindestens zwei gegenüberliegenden geraden Kanten eine lasttragende Fläche definiert; und optional ist das Profil der Passfeder (124) jedes der mindestens vier Verbinder im Wesentlichen viereckig.

9. Bestandsverwaltungsstation (60) nach einem der vorhergehenden Ansprüche, wobei die Passfedern (124) der ersten und zweiten Verbinderabschnitte (118, 120) jedes der mindestens vier Verbinder (116) in derselben Ebene liegen und so ausgerichtet sind, dass eine Linie, die sich entlang des Mittelpunkts der Passfedern der ersten und zweiten Verbinderabschnitte erstreckt, sich im Wesentlichen bei 90° schneidet; und optional liegt die Passfeder (124) des dritten Verbinderabschnitts (122) jedes der mindestens vier Verbinder in einer Ebene senkrecht zu der Ebene der Passfedern der ersten und zweiten Verbinderabschnitte, so dass der Verbinder eine Symmetrielinie aufweist, die sich durch die Passfeder des dritten Verbinderabschnitts (122) erstreckt.

10. Bestandsverwaltungsstation (60) nach einem der vorhergehenden Ansprüche, wobei die Passfeder (124) jedes der mindestens vier Verbinder einen erhöhten Ansatz umfasst; optional umfasst der erhöhte Ansatz eine im Wesentlichen flache Anlagefläche; und optional umfasst der erhöhte Ansatz eine Bohrung (140).

11. Bestandsverwaltungsstation (60) nach einem der vorhergehenden Ansprüche, wobei jeder der einen oder mehreren Montagevorsprünge (150a, 150b) jedes der mindestens vier Verbinder eine erste Bohrung (152) und eine zweite Bohrung (154) umfasst, wobei die erste Bohrung (152) eine Gewindebohrung ist und die zweite Bohrung (154) eine nicht gewindete Bohrung ist.

12. Bestandsverwaltungsstation (60) nach einem der vorhergehenden Ansprüche, wobei jeder der mindestens vier Verbinder einen Abstandshalter (156) zum Abstandhalten mit einem benachbarten Verbinder umfasst.

13. Bestandsverwaltungsstation (60) nach einem der vorhergehenden Ansprüche, wobei jede der modularen Strukturen in der Baugruppe eine im Wesentlichen quaderförmige Struktur aufweist.

14. Bestandsverwaltungsstation (60) nach einem der vorhergehenden Ansprüche, wobei die Baugruppe der modularen Strukturen eine Vielzahl von modularen Strukturen umfasst, die in einem Stapel angeordnet sind; und optional sind die Vielzahl von modularen Strukturen Seite an Seite angeordnet.

15. Abwicklungs-/Umpacksystem, umfassend:-
i) ein Lager- und Bereitstellungssystem, umfassend eine Gitterrahmenstruktur (14), umfassend:
eine Vielzahl von aufrechten Stützen (14), die in einer oder mehreren vertikalen Ebenen liegen und angeordnet sind, um eine Vielzahl von Gitterspalten (15) zu bilden, damit ein oder mehrere Behälter zwischen der Vielzahl von aufrechten Stützen gestapelt und von der Vielzahl von aufrechten Stützen in einer vertikalen Richtung geführt werden, wobei die Vielzahl von aufrechten Stützen an ihren oberen Enden durch einen ersten Satz von Gitterelementen, die sich in einer ersten Richtung erstrecken, und einen zweiten Satz von Gitterelementen, die sich in einer zweiten Richtung erstrecken, miteinander verbunden sind, wobei der zweite Satz von Gitterelementen quer zu dem ersten Satz von Gitterelementen in einer im Wesentlichen horizontalen Ebene verläuft, um ein Gitter oder eine Gitterstruktur zu bilden, die eine Vielzahl von Gitterzellen oder Gitterräumen umfasst;
wobei der erste und der zweite Satz von Gitterelementen einen ersten und einen zweiten Satz von Schienen jeweils auf einer oberen Ebene der Gitterrahmenstruktur stützen, damit eine robotische Lasthandhabungsvorrichtung einen oder mehrere Lagerbehälter auf der Gitterrahmenstruktur bewegt,
ii) eine oder mehrere Lasthandhabungsvorrichtungen (30), die ferngesteuert werden, um den einen oder die mehreren Behälter zu bewegen, die in der Gitterrahmenstruktur gelagert sind, wobei jede der einen oder mehreren Lasthandhabungsvorrichtungen umfasst:
i) eine Radbaugruppe (34, 36) zum Führen der Lasthandhabungsvorrichtung auf der Gitterstruktur;
ii) einen Behälteraufnahmeraum (40), der sich oberhalb der Gitterstruktur befindet; und
iii) eine Hebevorrichtung, die angeordnet ist, um einen einzelnen Behälter aus einem Stapel in den Behälteraufnahmeraum zu heben,
iii) eine Bestandsverwaltungsstation (60), wie in einem der Ansprüche 1 bis 14 definiert, wobei die Bestandsverwaltungsstation konfiguriert ist, um einen oder mehrere Lagerbehälter von dem Lager- und Bereitstellungssystem zu empfangen.

## Revendications

1. Poste de manutention de stocks (60) destiné à coopérer avec un système de stockage et de récupération, le système de stockage et de récupération comprenant une structure de cadre de grille (14) comprenant :
une pluralité de colonnes verticales (16) situées dans un ou plusieurs plans verticaux et disposées pour former une pluralité de colonnes de grille (15) pour qu'un ou plusieurs conteneurs (10) soient empilés entre et guidés par la pluralité de colonnes verticales (16) dans une direction verticale, la pluralité de colonnes verticales (16) soutiennent une grille située dans un plan sensiblement horizontal comprenant une pluralité de cellules de grille ou d'espaces de grille, ladite grille comprenant un premier ensemble d'éléments de grille (18) s'étendant dans une première direction et un second ensemble d'éléments de grille (20) s'étendant dans une deuxième direction, le second ensemble d'éléments de grille (20) s'étendant perpendiculaire au premier ensemble d'éléments de grille (18) ; le premier et le second ensemble d'éléments de grille soutient respectivement un premier et un second ensemble de rails (22a, 22b) à un niveau supérieur de la structure de cadre de grille pour un dispositif de manutention de charge (30) afin de déplacer un ou plusieurs conteneurs de stockage (10) sur la structure de cadre de grille (14), le poste de manutention de stocks (60) comprend un ensemble de structures modulaires (148), ledit ensemble de structures modulaires (148) étant disposé pour soutenir un système de transport (76) comprenant une pluralité d'unités de transport (78, 80, 82), chacune de la pluralité d'unités de transport (78, 80, 82) étant montée sur une section modulaire (117) respective de structures modulaires (110) adjacentes pour former un transporteur continu, dans lequel chacune des structures modulaires (110) dans l'ensemble comprend des sections modulaires (117) verticalement adjacentes, et dans lequel chacune des sections modulaires (117) comprend au moins quatre connecteurs (116), chacun des au moins quatre connecteurs (116) dans la section modulaire (117) unique est connecté à deux autres connecteurs (116) par des éléments de support horizontaux (112a, 112b) respectifs pour former un cadre sensiblement rectangulaire ; dans lequel la structure modulaire (110) est formée en connectant chacun des au moins quatre connecteurs des sections modulaires (117) verticalement adjacentes par des éléments de support sensiblement verticaux (114) pour former une structure de cadre ;
dans lequel chacun des au moins quatre connecteurs (116) comprenant un seul corps comprenant :
i) une première partie de connecteur (118) destinée à connecter un élément de support s'étendant dans une première direction,
ii) une deuxième partie de connecteur (120) destinée à connecter un élément de support s'étendant dans une deuxième direction,
iii) une troisième partie de connecteur (122) pour connecter un élément de support s'étendant dans une troisième direction, les première, deuxième et troisième directions étant sensiblement perpendiculaires entre elles, chacune des première, deuxième et troisième parties de connexion (118, 120, 122) comprend une clé (124) qui est profilée pour commander l'orientation des éléments de support (112a, 112b, 114) dans leurs première, deuxième et troisième directions respectives ;
iv) une première saillie de montage et une seconde saillie de montage, chacune des première et seconde saillies de montage présentant une face d'accouplement sensiblement plate destinée à s'accoupler avec une saillie de montage correspondante d'un connecteur adjacent, la première saillie de montage (150a) se situant dans un premier plan de saillie de montage et la seconde saillie de montage (150b) se situant dans un second plan de saillie de montage, le second plan de saillie de montage étant sensiblement perpendiculaire au premier plan de saillie de montage de sorte que des structures modulaires adjacentes dans l'ensemble soient jointes ensemble par le(s) première et/ou seconde saillie(s) de montage d'un ou plusieurs de leurs connecteurs respectifs ;
dans lequel les extrémités distales de chacun des éléments de support horizontaux et verticaux (112a, 112b, 114) comprennent une ouverture (130) présentant un profil complémentaire au profil des clés (124) des connecteurs (116) de sorte que l'orientation des éléments de support horizontaux et
verticaux (112a, 112b, 114) soit commandée par le profil des clés (124).

2. Poste de manutention de stocks (60) selon la revendication 1, dans lequel l'ensemble de structures modulaires (148) est disposé pour soutenir :-
i) un poste de port destiné à recevoir un conteneur de stockage qui est déposé depuis et récupéré à travers une cellule de grille ;
ii) un poste d'accès pour permettre l'accès à un ou plusieurs conteneurs de stockage déposés depuis le poste de port, et dans lequel le système de transport (76) est disposé pour transporter un conteneur de stockage entre le poste de port et le poste d'accès.

3. Poste de manutention de stocks (60) selon la revendication 2, dans lequel le poste de port comprend une goulotte verticale (62) pouvant être configurée pour coopérer avec au moins une colonne verticale, l'au moins une goulotte verticale (62) présentant une première ouverture destinée à recevoir un conteneur abaissé par au moins un dispositif de manutention de charge à travers une cellule de grille et une seconde ouverture destinée à permettre au conteneur de sortir du poste de port.

4. Poste de manutention de stocks selon la revendication 3, dans lequel l'ensemble de structures modulaires (148) comprend en outre une pluralité de structures modulaires disposées en pile pour définir la goulotte verticale (62) ; et optionnellement, la goulotte verticale (62) comprend un dispositif de lève-conteneurs (68) pouvant être configuré pour soulever un conteneur de stockage vers le haut vers la grille de sorte que, en utilisation, le conteneur de stockage puisse être récupéré par l'au moins un dispositif de manutention de charge.

5. Poste de manutention de stocks selon l'une quelconque des revendications 1 à 4, dans lequel le poste de port comprend une zone d'alimentation (64) destinée à recevoir un conteneur de stockage qui est déposé à travers une cellule de grille et une zone de récupération destinée à récupérer un conteneur de stockage à travers une cellule de grille.

6. Poste de manutention de stocks (60) selon la revendication 5, dans lequel la pluralité d'unités de transport comprennent une unité de transport d'entrée (78) qui est configurée dans la zone d'alimentation (64), une unité de transport d'accès (80) qui est disposée dans le poste d'accès (66) et une unité de transport de sortie (82) qui est disposée dans la zone de récupération ; optionnellement, l'unité de transport d'entrée (78), l'unité de transport de sortie (82) et l'unité de transport d'accès (80) étant disposées pour transporter respectivement un conteneur de stockage dans une première, une deuxième et une troisième direction de transport, et dans lequel la première direction de transport de l'unité de transport d'entrée (78) est opposée et parallèle à la deuxième direction de transport de l'unité de transport de sortie (82) et la troisième direction de transport de l'unité de transport d'accès (80) est orthogonale à la fois à la première direction de transport de l'unité de transport d'entrée (78) et à la deuxième direction de transport de l'unité de transport de sortie (82) ; et, optionnellement, l'unité de transporteur d'entrée (78), l'unité de transporteur de sortie (82) et l'unité de transporteur d'accès (80) étant disposées pour transporter respectivement un conteneur de stockage dans une première, une deuxième et une troisième direction de transport, et dans lequel le système de transporteur est disposé de sorte que la première direction de transport de l'unité de transporteur d'entrée (78) soit orthogonale à la fois à la deuxième direction de transport de l'unité de transporteur de sortie (82) et à la troisième direction de transport de l'au moins une unité de transporteur d'accès (80).

7. Poste de manutention de stocks (60) selon l'une quelconque des revendications 2 à 6, dans lequel le poste de port et/ou le poste d'accès comprend(nent) une cellule de charge.

8. Poste de manutention de stocks (60) selon l'une quelconque des revendications précédentes, dans lequel le profil de la clé (124) de chacun des au moins quatre connecteurs comprend au moins deux bords droits opposés pour empêcher la rotation des éléments de support autour d'un axe qui s'étend à travers la clé, chacun des au moins deux bords droits opposés définissant une surface de support de charge ; et optionnellement, le profil de la clé (124) de chacun des au moins quatre connecteurs est sensiblement quadrilatéral.

9. Poste de manutention de stocks (60) selon l'une quelconque des revendications précédentes, dans lequel les clés (124) des première et deuxième parties de connecteur (118, 120) de chacun des au moins quatre connecteurs (116) se situent dans le même plan et sont orientées de telle sorte qu'une ligne s'étendant le long du point médian des clés des première et deuxième parties de connecteur se croise à sensiblement 90 ° ; et, optionnellement, la clé (124) de la troisième partie de connecteur (122) de chacun des au moins quatre connecteurs se situe dans un plan perpendiculaire au plan des clés des première et deuxième parties de connecteur de sorte que le connecteur présente une ligne de symétrie s'étendant à travers la clé de la troisième partie de connecteur (122).

10. Poste de manutention de stocks (60) selon l'une quelconque des revendications précédentes, dans lequel la clé (124) de chacun des au moins quatre connecteurs comprend un bossage surélevé ; optionnellement, le bossage surélevé comprend une face d'accouplement sensiblement plate ; et optionnellement, le bossage surélevé comprend un alésage (140).

11. Poste de manutention de stocks (60) selon l'une quelconque des revendications précédentes, dans lequel chacune de la ou des saillies de montage (150a, 150b) de chacun des au moins quatre connecteurs comprend un premier alésage (152) et un second alésage (154), le premier alésage (152) est un alésage fileté et le second alésage (154) est un alésage non fileté.

12. Poste de manutention de stocks (60) selon l'une quelconque des revendications précédentes, dans lequel chacun des au moins quatre connecteurs comprend une entretoise (156) destinée à espacer un connecteur adjacent.

13. Poste de manutention de stocks (60) selon l'une quelconque des revendications précédentes, dans lequel chacune des structures modulaires dans l'ensemble présente une structure sensiblement cuboïde .

14. Poste de manutention de stocks (60) selon l'une quelconque des revendications précédentes, dans lequel l'ensemble de structures modulaires comprend une pluralité de structures modulaires disposées en pile ; et, optionnellement, la pluralité de structures modulaires sont disposées côte à côte.

15. Système de remplissage/transvasement comprenant .
i) un système de stockage et de récupération comprenant une structure de cadre de grille (14) comprenant :
une pluralité de colonnes verticales (14) situées dans un ou plusieurs plans verticaux et disposées pour former une pluralité de colonnes de grille (15) pour qu'un ou plusieurs conteneurs soient empilés entre et guidés par la pluralité de colonnes verticales dans une direction verticale, la pluralité de colonnes verticales sont reliées entre elles au niveau de leurs extrémités supérieures par un premier ensemble d'éléments de grille s'étendant dans une première direction et un second ensemble d'éléments de grille s'étendant dans une deuxième direction, le second ensemble d'éléments de grille s'étendant transversalement au premier ensemble d'éléments de grille dans un plan sensiblement horizontal pour former une grille ou une structure de grille comprenant une pluralité de cellules de grille ou d'espaces de grille ;
le premier et le second ensemble d'éléments de grille soutient respectivement un premier et un second ensemble de rails à un niveau supérieur de la structure de cadre de grille pour un dispositif de manutention de charge robotisé afin de déplacer un ou plusieurs conteneurs de stockage sur la structure de cadre de grille,
ii) un ou plusieurs dispositifs de manutention de charge (30) commandés à distance pour déplacer le ou les conteneurs stockés dans la structure de cadre de grille, chacun du ou des dispositifs de manutention de charge comprend :
i) un ensemble roues (34, 36) destiné à guider le dispositif de manutention de charge sur la structure de grille ;
ii) un espace de réception de conteneurs (40) situé au-dessus de la structure de grille ; et
iii) un dispositif de levage disposé pour soulever un seul conteneur à partir d'une pile dans l'espace de réception de conteneurs,
iii) un poste de manutention de stocks (60) telle que définie selon l'une quelconque des revendications 1 à 14, ledit poste de manutention de stocks étant configuré pour recevoir un ou plusieurs conteneurs de stockage à partir du système de stockage et de récupération.
